# EUROPÄISCHE PATENTSCHRIFT

(11) **EP 3 005 746 B1**
(45) Veröffentlichungstag und Bekanntmachung des Hinweises auf die Patenterteilung: **10.07.2019**
(21) Anmeldenummer: 14732509.6
(22) Anmeldetag: 28.05.2014
(51) Int. Cl.: H04W 4/029, A63B 71/06

(54) **KONZEPT ZUM SENDEN UND/ODER ZUM EMPFANGEN VON DATENPAKETEN FÜR EIN SYSTEM ZUM DETEKTIEREN EINES EREIGNISSES, ENTSPRECHEND EINER ÜBERQUERUNG EINES OBJEKTS ÜBER EINE ÜBERWACHTE LINIE**
CONCEPT FOR TRANSMITTING AND/OR RECEIVING DATA PACKETS FOR A SYSTEM FOR DETECTING AN EVENT, CORRESPONDING TO AN OBJECT CROSSING OVER A MONITORED LINE
CONCEPT D'ÉMISSION ET/OU RÉCEPTION DE PAQUETS DE DONNÉES POUR UN SYSTÈME DE DÉTECTION D'UN ÉVÉNEMENT CORRESPONDANT AU PASSAGE D'UN OBJET AU-DELÀ D'UNE LIGNE SURVEILLÉE

(30) Priorität: 07.06.2013 DE 102013105936
(43) Veröffentlichungstag der Anmeldung: 13.04.2016
(73) Patentinhaber: Fraunhofer-Gesellschaft zur Förderung der angewandten Forschung e.V., 80686 München (DE)
(72) Erfinder: BERNHARD, Josef, 92507 Nabburg (DE); PETKOV, Hristo, 90425 Nürnberg (DE); PSIUK, Rafael, 91058 Erlangen (DE); KILIAN, Gerd, 91056 Erlangen (DE); TRÖGER, Hans-Martin, 91054 Erlangen (DE)
(74) Vertreter: 2SPL Patentanwälte PartG mbB
(86) Internationale Anmeldenummer: PCT/EP2014/061057
(87) Internationale Veröffentlichungsnummer: WO 2014/195206

(56) Entgegenhaltungen:
- EP-A2- 1 666 916
- WO-A1-01/66201
- US-A1- 2004 045 038
- US-A1- 2004 171 388
- US-A1- 2005 023 764
- US-A1- 2010 030 350

## Beschreibung

Ausführungsbeispiele betreffen ein Konzept zum Senden und Empfangen von Datenpakten für ein System zum Detektieren eines Ereignisses, entsprechend einer Überquerung eines Objekts über eine überwachte Linie. Insbesondere betreffen Ausführungsbeispiele entsprechende Sender, Empfänger, Sendeverfahren, Empfangsverfahren, sowie dafür geeignete Computerprogramme.

Bei zahlreichen Anwendungen erscheint es wünschenswert, zuverlässig ein Ereignis, entsprechend einer Überquerung eines beweglichen Objekts über eine überwachte Linie zu detektieren, wie z.B. ob ein Spielgerät, insbesondere ein Ball, beispielsweise eine Tor- oder Seitenauslinie überquert hat. Dazu können im Sportbereich, insbesondere bei Mannschaftssportarten wie beispielsweise Fußball, Handball, Football, Rugby oder Eishockey automatische Torerkennungssysteme eingesetzt werden, die dazu dienen den Schiedsrichter bei der Entscheidung für oder gegen ein Tor als zu detektierendes Ereignis zu unterstützen. Die Entscheidung, ob ein Tor gefallen ist, wird bei diesen Systemen oft mittels einer Auswertelektronik am oder in der Nähe des Tors selber getroffen.

Neben Torerkennungssystemen, welche auf einer Auswertung künstlich erzeugter elektromagnetischer Felder am Spielgerät und/oder Tor basieren, existieren auch optische bzw. videobasierte Erkennungssysteme, bzw. Torerkennungssysteme, beispielsweise das sogenannte Hawk-Eye System. Eine Tordetektion kann bei diesem System ebenfalls automatisch getroffen werden. Bei sämtlichen Systemen können Entscheidungen über ein Ereignis, wie z.B. "Tor", in Rechnern außerhalb des Spielfeldes verarbeitet und/oder ausgewertet werden.

Die EP 1 666 916 A2 betrifft ein System zum Verfolgen einer Bewegung eine Objekts in einem vorbestimmten Gebiet.

Des Weiteren betrifft die US 2010/030350 A1 ein Verfahren zum Erzeugen eine Information über ein Sportevent.

Die WO 01/66201 A1 betrifft eine Einrichtung zur Erfassung der Position und/oder Bewegung von Objekten und/oder Lebewesen. Unabhängig davon, wie die Positionserfassung erfolgt, werden die vom Positionserfassungssystem gewonnenen Daten ausgewertet und daraus Informationen zur weiteren Verwendung berechnet. Es kann z. B. insbesondere eine Überprüfung nach bestimmten Bewegungsabläufen erfolgen, die vor allem bei der Überwachung von Spielabläufen oder Rennabläufen eine Aussage über die z. B. regelgerechte Bewegung von Objekten und/oder Lebewesen ermöglicht. Aus den Bewegungsabläufen kann man Bewegungsmuster erkennen. Zusätzlich kann aus dem Bewegungsablauf durch Differentiation nach der Zeit die Geschwindigkeit und Beschleunigung berechnet werden.

Ausführungen über Funkressourcen (pseudo-random time division multiplex etc.) sind beispielsweise in dem Dokument US 2004/171388 A1 offenbart.

Ein tragbarer Empfänger als Armbanduhr mit integriertem Ergebniszähler ist beispielsweise in dem Dokument US 2005/023764 A1 offenbart.

Das Dokument US 2004/045038 A1 offenbart ein Auslesen von Eventinformationen aus Paketfeldern.

Wünschenswert wäre von diesen Erkennungssystemen bzw. Systemen zum Detektieren, bei denen die Torerkennung bzw. Detektion des Ereignisses oft außerhalb des Spielfelds getroffen wird, die Information, ob ein Ereignis bzw. Tor detektiert wurde und/oder nicht, beispielsweise an einen Schiedsrichter auf dem Platz oder Spielfeld, der sich ggf. auf dem Spielfeld bewegt, zu übertragen.

Eine Aufgabe von Ausführungsbeispielen kann also darin gesehen werden, eine Übertragungsmöglichkeit bereitzustellen, die gewährleistet, dass eine Information über die Detektion eines Ereignisses sicher, zuverlässig und/oder zeitnah zu einem Empfänger übertragen werden kann.

Diese Aufgabe wird durch einen Sender, einen Empfänger, ein Verfahren zum Senden, ein Verfahren zum Empfangen und Computerprogramme, jeweils mit den Merkmalen der unabhängigen Patentansprüche, gelöst.

Weitere vorteilhafte Ausgestaltungen und Weiterbildungen sind Gegenstand der abhängigen Patentansprüche.

Ein erster Aspekt betrifft einen Sender für ein System zum Detektieren eines Ereignisses, das einer Überquerung eines Objekts über eine überwachte Linie entspricht bzw. dadurch ausgelöst wird. Der Sender ist dabei ausgebildet (beispielsweise mittels entsprechender elektrischer Senderschaltungen), um unabhängig von einem Auftreten des Ereignisses aufeinanderfolgend Datenpakete zu versenden. Der Sender ist dazu ausgebildet bzw. angepasst, jedes der Datenpakete mit einer Information über eine Anzahl von aufgetretenen Ereignissen bis zu einem Sendezeitpunkt des Datenpakets zu versehen. Außerdem ist der Sender ausgebildet, die Datenpakete so zu versenden, dass die Sendezeitpunkte von aufeinanderfolgenden Datenpaketen jeweils in einem vorbestimmten Sendezeitraum liegen.

Ein weiterer Aspekt betrifft einen dazu korrespondierenden Empfänger für ein System zum Detektieren eines Ereignisses, das einer Überquerung eines Objekts über eine überwachte Linie entspricht bzw. dadurch ausgelöst wird. Der Empfänger ist ausgebildet (beispielsweise vermittels entsprechender elektrischer Empfängerschaltungen), um unabhängig von dem Auftreten des Ereignisses aufeinanderfolgende Datenpakete zu empfangen. Jedes der Datenpakete weist eine Information über eine Anzahl von aufgetretenen Ereignissen bis zu einem Sendezeitpunkt des Datenpakets auf, wobei der Empfänger die Information auslesen und weiterverarbeiten kann. Die Sende- bzw. Empfangszeitpunkte der aufeinanderfolgenden Datenpakete liegen jeweils in einem vorbestimmten Sende- bzw. Empfangszeitraum.

Ein weiterer Aspekt betrifft ein Verfahren zum Versenden von Datenpaketen für ein System zum Detektieren eines Ereignisses, das einer Überquerung eines Objekts über eine überwachte Linie entspricht bzw. dadurch ausgelöst wird. Dabei werden in einem Verfahrensschritt aufeinanderfolgende Datenpakete derart erzeugt, dass jedes der Datenpakete eine Information über eine Anzahl von aufgetretenen Ereignissen bis zu einem Sendezeitpunkt des Datenpakets aufweist. Ferner werden in einem weiteren Verfahrensschritt aufeinanderfolgende Datenpakete versendet, unabhängig von einem Auftreten des Ereignisses, derart dass Sendezeitpunkte von aufeinanderfolgenden Datenpaketen jeweils in einem vorbestimmten Sendezeitraum liegen.

Ein weiterer Aspekt betrifft ein Verfahren zum Empfangen von Datenpaketen für ein System zum Detektieren eines Ereignisses, das einer Überquerung eines Objekts über eine überwachte Linie entspricht bzw. dadurch ausgelöst wird. Bei dem Verfahren werden in einem Verfahrensschritt aufeinanderfolgende Datenpakete unabhängig von einem Auftreten des Ereignisses empfangen. Die Sende- bzw. Empfangszeitpunkte der Datenpakete liegen jeweils in einem vorbestimmten Sende- bzw. Empfangszeitraum. In einem weiteren Verfahrensschritt werden die Datenpakete ausgelesen, wobei jedes der Datenpakete eine Information über eine Anzahl von aufgetretenen Ereignissen bis zu einem Sendezeitpunkt des Datenpakets aufweist. Beispielsweise können bei dem Verfahren die Datenpakete auch ausgewertet und angezeigt werden, wenn die Anzahl der Ereignisse gegenüber der Anzahl der Ereignisse aus einem vorhergehenden Datenpaket erhöht ist.

Weitere Aspekte betreffen jeweils ein Computerprogramm zur Durchführung eines der genannten Verfahren oder zumindest einzelner Verfahrensschritte davon, wenn das Computerprogramm auf einer programmierbaren Hardwarekomponente abläuft, wie z.B. einem digitalen Signalprozessor (DSP) oder einer anwendungsspezifischen integrierten Schaltung (ASIC).

Gemäß Ausführungsbeispielen können aufeinanderfolgende Datenpakete beispielsweise Datenpakete sein, die sequenziell, zyklisch und/oder periodisch verschickt werden. Dabei können Zeiträume, die zwischen dem Versenden bzw. den Sendezeitpunkten der Datenpakete liegen, eine unterschiedliche Dauer bzw. Länge aufweisen. Beispielsweise kann ein Zeitabstand zwischen dem Sendezeitpunkt eines vorhergehenden Datenpakets und dem Sendezeitpunkt eines aktuellen Datenpakets kürzer als der Abstand zwischen dem Sendezeitpunkt des aktuellen Datenpakets und dem Sendezeitpunkt eines nachfolgenden Datenpakets bzw. einem nächsten Datenpaket sein. In anderen Worten kann ein Sendezeitpunkt eines Datenpakets innerhalb seines vorbestimmten Sendezeitraums frei wählbar sein. Der Sendezeitpunkt eines Datenpakets kann also eher zu Beginn oder aber in der Mitte des vorbestimmten Sendezeitraums für das Datenpaket liegen.

Ein Sender, der ausgebildet ist, Datenpakete unabhängig von einem Auftreten eines Ereignisses zu versenden, kann fortlaufend Datenpakete jeweils zu einem Sendezeitpunkt innerhalb eines vorbestimmten Sendezeitraums versenden, unabhängig davon ob das Ereignis auftritt oder nicht. Wenn das Ereignis vor dem Sendezeitpunkt eines Datenpakets auftritt, kann das aktuelle Datenpaket ggf. eine neue, andere Information über eine erhöhte bzw. inkrementierte Anzahl von aufgetretenen Ereignissen gegenüber dem vorhergehenden Datenpaket aufweisen. Wenn hingegen kein Ereignis vor dem Versenden eines Datenpakets auftritt, kann das Datenpaket trotzdem innerhalb des vorbestimmten Sendezeitraums versandt werden und kann eine Information über die gleiche Anzahl von aufgetretenen Ereignissen aufweisen, wie auch das vorhergehende Datenpaket.

Gemäß Ausführungsbeispielen ist das Auftreten des Ereignisses nicht vorbestimmt bzw. kann nicht ohne Weiteres im Voraus antizipiert werden, sondern kann beispielsweise von dem mit dem Sender gekoppelten bzw. koppelbaren System zum Detektieren des Ereignisses an den Sender übermittelt werden. Im Vergleich dazu, ist der Sendezeitraum für ein Datenpaket vorbestimmt bzw. zumindest in gewissen Grenzen vorgegeben. Dabei kann der vorbestimmte Sendezeitraum beispielsweise entweder von dem Sender oder von dem System zum Detektieren des Ereignisses vorgegeben werden, derart, dass der vorbestimmte Sendezeitraum beispielsweise dem Sender und/oder dem Empfänger schon im Voraus bekannt sein oder ermittelt werden kann.

Dadurch, dass gemäß den oben genannten Aspekten unabhängig von einem Auftreten des Ereignisses, aufeinanderfolgend Datenpakete versendet bzw. empfangen werden, derart, dass jedes der Datenpakete eine Information über eine Anzahl von aufgetretenen Ereignissen bis zu einem Sendezeitpunkt des Datenpakets aufweist, kann ermöglicht werden, dass die Übertragung des detektierten Ereignisses sehr sicher erfolgen kann. Dies ist möglich, weil das Übertragungsverfahren relativ abhörsicher ausgebildet werden kann. Die Gefahr, dass ein mit dem (Ereigniserkennungs-) System detektiertes Ereignis von außen abgehört werden kann, wird reduziert, da nicht nur zu dem Zeitpunkt einer positiven Ereignisdetektion, beispielsweise einer Torerkennung, die Information von dem System beispielsweise mittels eines Funksenders unidirektional an den Empfänger übertragen wird. Stattdessen können beispielsweise kontinuierlich bzw. fortlaufend Informationen bzw. Datenpakete übermittelt werden. Allein aus der Übermittlung eines einzelnen Datenpakets kann damit ggf. noch nicht auf die Detektion eines Ereignisses geschlossen werden. Dadurch kann beispielsweise die Gefahr minimiert bzw. verhindert werden, dass das Ergebnis des Detektionssystems von außen abgehört werden kann. Mit anderen Worten ausgedrückt kann beispielsweise die Zuverlässigkeit der Übertragung und damit die Sicherheit erhöht werden. Dadurch, dass die Übertragung der Datenpakete unabhängig von dem Ereignis erfolgt, kann eine Informationsverschleierung in der Übertragung und/oder ggf. eine Abhörsicherheit erhöht werden. Dadurch kann ggf. verhindert werden, dass beispielsweise an einen Schiedsrichter bzw. von dem Schiedsrichter falsche Torinformationen übermittelt werden. Ferner kann mit der Übertragung gemäß den o.g. Aspekten die Information über die Detektion des Ereignisses, nahezu in Echtzeit, beispielsweise nur mit einer minimalen Verzögerung erreicht werden.

Ferner können die Datenpakete beispielsweise eine Länge bzw. Zeitdauer aufweisen, die unabhängig von einem eingetretenen Ereignis, bzw. dem Eintreten des Ereignisses ist. Dadurch kann beispielsweise ermöglicht werden, dass anhand der Länge der Datenpakete kein Rückschluss auf die Torerkennung bzw. einer Ereignisdetektion erfolgen kann. Beispielsweise können die Datenpakete immer eine gleiche Länge bzw. Zeitdauer und dann beispielsweise in Abhängigkeit eines detektierten Ereignisses einen anderen Inhalt aufweisen. Alternativ können die Datenpakete beispielsweise immer eine unterschiedliche, beispielsweise zufällig gewählte Länge aufweisen die ebenfalls unabhängig von einem detektierten Ereignis ist.

Zusätzlich können die Datenpakete bzw. die Information der Datenpakete bzw. der Dateninhalt bzw. die Daten verschlüsselt und/oder verwürfelt sein. Dazu kann jedwedes Verschlüsselungsverfahren (z. B. AES128, AES256, etc.) verwendet werden - je nach angestrebtem Sicherheitsniveau. Dadurch kann ggf. ermöglicht werden, dass der Dateninhalt der Datenpakete für Unberechtigte nicht lesbar ist, wodurch eine ungewollte Manipulation der Ereigniserkennung unterbunden werden kann.

Bei einigen weiteren Ausführungsbeispielen kann der Sender dazu ausgebildet bzw. angepasst sein, die Datenpakete derart zu versenden, dass jedes der Datenpakete eine Information über einen Sendezeitpunkt des Datenpakets aufweist. Analog kann bei einigen weiteren Ausführungsbeispielen der Empfänger ausgebildet bzw. dazu angepasst sein, die Datenpakete, die eine Information über einen Sendezeitpunkt des Datenpakets aufweisen, auszulesen und weiterzuverarbeiten. So kann ggf. ein Schutz vor Manipulation durch Verschlüsselung und Zeitrasterung von einem Empfangsfenster für den Empfänger, das sich durch die Übermittlung der Information der Sendezeitpunkte ergeben kann, verbessert werden.

Der Sendezeitpunkt bzw. eine Information über einen Sendezeitpunkt kann beispielsweise eine Zeit, gemessen von einem definierten Nullpunkt bzw. Null-Zeitpunkt (Bezugsgröße) in einer kleinen Einheit, beispielsweise Sekunden oder Millisekunden sein. Der Sender, der Empfänger und das System können beispielsweise einen gemeinsamen Nullpunkt aufweisen. In anderen Worten können Sender und Empfänger synchronisiert sein. Die Information über eine Anzahl von aufgetretenen Ereignissen kann beispielsweise ein Zählerstand sein, insbesondere ein Torzähler und/oder kann ein Spielstand sein. Mit anderen Worten ausgedrückt kann, wenn mit dem System zum Detektieren des Ereignisses ein solches Ereignis (z.B. ein Tor bei einem Fußballspiel) detektiert wird, eine Anzahl von aufgetretenen Ereignissen erhöht werden, also beispielsweise der Torzähler für ein Tor inkrementiert werden. Beispielsweise kann die entsprechende Information in einem Telegramm des Datenpakets aktualisiert werden.

Bei manchen Ausführungsbeispielen kann das Versenden der Datenpakete vorteilhaft drahtlos, d.h. über eine Funkschnittstelle, erfolgen. Dadurch kann ggf. ermöglicht werden, dass der Empfänger beweglich ausgebildet sein kann. Dadurch kann beispielsweise ermöglicht werden, dass eine Person, beispielsweise ein Schieds- oder Linienrichter, die sich auf dem Spielfeld bewegt, den Empfänger mit sich führt.

Bei einigen weiteren Ausführungsbeispielen ist der Sender ausgebildet, jedes der Datenpakete derart zu erzeugen, dass jedes der Datenpakete eine Information über eine Funkressource für ein dem Datenpaket folgendes Datenpaket aufweist. Ein folgendes Datenpaket kann dabei beispielsweise das unmittelbar (zum nächsten Sendezeitpunkt im nächsten vorbestimmten Sendezeitraum) folgende Datenpaket sein. Dementsprechend kann ein vorhergehendes Datenpaket beispielsweise eine Information über eine Funkressource für das aktuelle Datenpaket aufweisen. Das aktuelle Datenpaket kann beispielsweise eine Information über eine Funkressource für das nächste oder folgende Datenpaket aufweisen. Dabei ist das folgende Datenpaket gemäß Ausführungsbeispielen das Datenpaket, das als nächstes nach dem aktuellen Datenpaket versendet wird. Dadurch kann ggf. ermöglicht werden, dass der Empfänger vorab Informationen über das folgende bzw. nächste Datenpaket erhält und sich bzw. seine Empfängerschaltung entsprechend darauf einstellen kann. Eine Funkressource kann gemäß Ausführungsbeispielen jede beliebige Funkressource, beispielsweise ein Zeitintervall, eine Frequenz, ein Code, etc. oder eine Kombination davon sein. Ferner kann das Datenpaket Informationen zu Funkressourcen, die mehrere folgende Datenpakete betreffen, aufweisen, beispielsweise für ein nächstes, übernächstes und/oder überübernächstes, etc. Datenpaket. Dadurch kann beispielsweise die Sicherheit der Übertragung erhöht werden. Wenn beispielsweise ein Datenpaket nicht von dem Empfänger erhalten bzw. ausgelesen werden kann, kann der Empfänger die Information über die Funkressource über das nächste Datenpaket ggf. bereits aus einem der vorhergehenden Datenpakete erhalten haben.

Bei einigen Ausführungsbeispielen kann der Sender ausgebildet sein, das Datenpaket derart zu erzeugen, sodass das Datenpaket eine Information über ein Alter des aufgetretenen Ereignisses aufweist. Beispielsweise kann das Datenpaket eine Information über das Alter bzw. eine Aktualität des zuletzt aufgetretenen Ereignisses (z.B. "Tor") aufweisen. Beispielsweise kann das Datenpaket als eine Information über das Alter einen Zeitpunkt, an dem die Anzahl von aufgetretenen Ereignissen bis zum Sendezeitpunkt zum letzten Mal erhöht wurde, aufweisen. Dadurch kann ggf. ermöglicht werden, dass aus dem Datenpaket erkennbar ist, wie aktuell bzw. zuverlässig die Information zu der Anzahl des Ereignisses ist. Das kann beispielsweise wichtig sein, wenn Datenpakete nicht in der richtigen Reihenfolge bei dem Empfänger ankommen, bzw. von diesem empfangen werden oder, wenn eine Mehrzahl von Sendern Datenpakete versenden. Mit anderen Worten ausgedrückt, kann das Alter bzw. die Information über oder zu dem Alter des aufgetretenen Ereignisses, beispielsweise ein Alter des Torzählerstandes ein Zeitstempel oder Zeitwert sein, oder ein Zählwert sein, der angibt wie viele Datenpakete das Ereignis bzw. eine Erhöhung der Anzahl der Ereignisse zurückliegt. Aufgrund der Altersinformation kann ein Empfänger beispielsweise selbstständig entscheiden, ob die Information noch aktuell ist und beispielsweise auf einer mit dem Empfänger gekoppelten Anzeigevorrichtung ausgegeben werden soll.

Bei einigen weiteren Ausführungsbeispielen ist der Sender ausgebildet, jedes der Datenpakete zu einem zufälligen Sendezeitpunkt (innerhalb des vorbestimmten Sendezeitraums bzw. Sendeintervalls) zu versenden. Die Sendezeitpunkte können beispielsweise von dem Sender mittels eines Zufallsgenerators bestimmt werden. Gemäß Ausführungsbeispielen werden die Datenpakete zu dem zufälligen Sendezeitpunkt derart versendet, dass das Datenpaket innerhalb seines vorbestimmten Sendezeitraums vollständig versendet ist. So kann beispielsweise ermöglicht werden, dass eine vorbestimmte Übertragungsgeschwindigkeit bzw. -rate und dadurch auch eine zeitnahe Übertragung eines detektierten Ereignisses gewährleistet wird. Mit anderen Worten ausgedrückt, soll zwischen zwei Sendepaketen eine maximale Verzögerung eingehalten werden. So kann ggf. ermöglicht werden, dass eine gewisse Gleichverteilung beispielsweise ein geforderter Sender Duty-Cycle, welcher beispielsweise einem Anteil der Sendezeiten im Vergleich zu der Gesamtzeit der Übertragung entsprechen kann, eingehalten werden kann.

Bei einigen weiteren Ausführungsbeispielen ist die übermittelte Funkressource der Sendezeitpunkt des folgenden Datenpakets. Dabei ist das folgende Datenpaket das Datenpaket das als nächstes nach dem aktuellen Datenpaket versendet wird. Dadurch kann beispielsweise ermöglicht werden, dass der Empfänger eine Information darüber erhält, wann bzw. in welchem Intervall oder Empfangszeitfenster das nächste bzw. folgende Datenpaket zu erwarten ist. So kann ggf. ermöglicht werden, dass der Empfänger zwischen den gesendeten Datenpaketen bzw. zwischen den zu erwartenden Empfangszeitfenstern eine Empfangsleistung einer Empfängerschaltung reduziert, bzw. in einen Ruhe- oder Schlafmodus geht, bzw. schlafen gelegt wird. So kann der Empfänger beispielweise Strom sparen. Mit anderen Worten ausgedrückt, kann der Empfänger dadurch, dass nicht ein kontinuierlicher Datenstrom übertragen wird, sondern kurze Datenpakete in zyklisch wiederkehrenden Abständen, stromsparend ausgeführt werden.

Bei manchen Ausführungsbeispielen kann der Sender ausgebildet sein, in einem Multiplexverfahren mit einem zweiten Sender die aufeinanderfolgenden Datenpakete zu versenden. So kann ggf. ermöglicht werden, dass zwei unterschiedliche Ereignisse, also beispielsweise ein Tor einer ersten Mannschaft und ein Tor einer zweiten Mannschaft, detektiert, überwacht bzw. an einen Empfänger übermittelt werden. Dazu kann zumindest einer der beiden Sender beispielsweise ein Empfangsmodul aufweisen, das ausgebildet ist, aufeinanderfolgende Datenpakete des anderen Senders zu empfangen. Beispielsweise kann der zweite Sender im Wesentlichen analog zu dem ersten Sender ausgebildet sein. Außerdem können die Datenpakete des zweiten Senders im Wesentlichen analog zu den Datenpaketen des ersten Senders aufgebaut sein. Beispielsweise kann jedes der Datenpakete des zweiten Senders zumindest eine Information über eine bis zu dem Sendezeitpunkt aufgetretene Anzahl von zweiten Ereignissen, also beispielsweise Toren einer zweiten Mannschaft aufweisen. Ferner kann der (erste) Sender ausgebildet sein, die aufeinanderfolgenden Datenpakete derart zu erzeugen, dass jedes Datenpaket eine Information über die Anzahl der zweiten aufgetretenen Ereignisse bis zu dem Sendezeitpunkt aufweist. Dabei können Multiplexverfahren jedweder Art eingesetzt werden: beispielsweise Raum-, Frequenz- bzw. Wellenlängen-, Zeit- und/oder Codemultiplexverfahren. Mit anderen Worten bedeutet dies, dass bei Systemen, bei denen unterschiedliche Ereignisse detektiert werden, beispielsweise Tore von zwei Mannschaften für jedes Ereignis ein separates Erkennungssystem genutzt werden kann. Die Detektion des Ereignisses, beispielsweise des Torereignisses, kann beispielsweise direkt von einem Sender, der beispielsweise an dem jeweiligen Detektionsort bzw. Erkennungssystem integriert und/oder mit dem System verbunden sein kann, gesendet werden. Es können also von zumindest einem Sender Datenpakte erzeugt werden, die eine Informationen zu einer Anzahl von ersten aufgetreten Ereignissen und eine Informationen zu einer Anzahl von zweiten aufgetreten Ereignissen aufweisen. Dadurch kann ggf. ermöglicht werden, dass die Übertragungssicherheit erhöht wird. In einem System mit zwei Sendern kann der Empfänger, auch wenn beispielsweise ein Datenpaket des zweiten Senders nicht von dem Empfänger empfangen wird, die Information über die Anzahl der zweiten Ereignisse mit einem Datenpaket des anderen bzw. ersten Senders erhalten. So kann ggf. ein zusätzlicher bzw. redundanter Übertragungsweg für die Detektion eines Ereignisses ermöglicht werden. Der zweite Sender kann im Wesentlichen analog zu dem ersten Sender aufgebaut bzw. ausgebildet sein, Datenpakete zu erzeugen bzw. zu versenden, die eine Information über eine Anzahl von aufgetretenen ersten Ereignissen aufweisen.

Dementsprechend betrifft ein weiterer Aspekt ein System zum Übertragen eines Ereignisses entsprechend einer Überquerung eines Objekts über eine überwachte Linie, wobei das System einen ersten Sender und einen zweiten Sender umfasst, wobei die Sender ausgebildet sind, um in einem Multiplexverfahren Datenpakete (wie beschrieben) zu versenden, und wobei jeder der Sender ausgebildet ist, Datenpakete des jeweils anderen Senders zu empfangen.

Gemäß manchen Ausführungsbeispielen ist das Ereignis ein Tor, das beispielsweise einer Überquerung eines Spielgeräts, insbesondere eines Balls oder eines Pucks über eine überwachte Torlinie entspricht. Dadurch kann der Sender bzw. auch der Empfänger, die Verfahren und die Computerprogramme für Torerkennungssysteme jeglicher Art genutzt werden. Beispielsweise können solche Torerkennungssysteme in Mannschaftssportarten, beispielsweise Fußball, Handball, Rugby, American Football, Australian Football, Wasserball etc. eingesetzt werden. Selbstverständlich sind auch andere Ereignisse denkbar, wie z.B. das Übertreten einer Linie durch einen Sportler.

Bei einigen weiteren Ausführungsbeispielen kann der Empfänger zusätzlich ausgebildet sein, ein Signal auszugeben, das das Ereignis anzeigt, wenn ein aktuell empfangenes Datenpaket eine Information über eine Anzahl von aufgetretenen Ereignissen aufweist, die gegenüber einer Anzahl von aufgetretenen Ereignissen gemäß einem vorhergehenden Datenpaket erhöht ist. Dadurch kann ermöglicht werden, dass beispielsweise ein Schiedsrichter nur dann eine aktualisierte Information erhält, wenn tatsächlich ein Ereignis, beispielsweise ein Tor aufgetreten ist bzw. detektiert wurde. Mit anderen Worten bedeutet dies, dass wenn ein Ereignis von dem System detektiert wird, die Anzahl der aufgetretenen Ereignisse in dem zunächst nachfolgenden Datenpaket erhöht wird. Der Empfänger kann an der Änderung der Anzahl der Ereignisse, beispielsweise ein geänderter Wert eines Torzählers, erkennen, dass ein Ereignis detektiert bzw. ein Tor von dem System erkannt wurde. So kann ggf. einem Nutzer, beispielsweise dem Schiedsrichter, akustisch visuell und/oder als ein Vibrationsalarm ein Ereignis, beispielsweise ein Torereignis angezeigt werden. Dies kann von dem Empfänger sowohl für ein erstes Ereignis (z.B. Tor einer ersten Mannschaft) wie auch für ein zweites Ereignis (z.B. Tor einer zweiten Mannschaft) ausgeführt werden. Dabei kann beispielsweise für ein erstes Ereignis ein anderes Signal als für ein zweites Ereignis ausgegeben werden.

Zusätzlich oder alternativ kann der Empfänger ausgebildet sein, zwischen zwei aufeinanderfolgenden Datenpaketen eine Empfangsleistung einer Empfängerschaltung zu reduzieren. Beispielsweise kann die Empfangsleistung der Empfängerschaltung basierend auf der Information über den Sendezeitpunkt des folgenden Datenpakets in dem aktuellen Datenpaket reduziert werden. Mit anderen Worten ausgedrückt, kann der Empfänger zwischen Intervallen oder Empfangszeitfenstern, in denen er den Empfang von Datenpaketen erwartet, die Empfangsleistung reduzieren. Dadurch kann ggf. ermöglicht werden, dass der Empfänger, zwischen zwei aufeinanderfolgenden Datenpaketen in einen Ruhe- bzw. Schlafmodus geht. Dadurch kann ggf. Energie bzw. ein Energieverbrauch des Empfängers gespart bzw. reduziert werden. Es kann beispielsweise ermöglicht werden, dass der Empfänger als mobiles Gerät, leicht tragbar und batteriebetrieben ausgeführt sein kann. Dadurch kann ggf. erreicht werden, dass der Empfänger mit einer vergleichsweise kleinen Energieversorgungseinrichtung, beispielsweise einer Batterie bzw. einem Akku oder einem sogenannten Energy-Harvester, ausgestattet bzw. versorgt werden kann. Die Energieversorgungseinrichtung kann eine vergleichsweise lange Laufdauer aufweisen, die beispielsweise zumindest für eine Spieldauer in einem Mannschaftssport ausreicht.

Ferner kann beispielsweise dadurch, dass der Empfänger, wenn keine Datenpakete zu erwarten sind, in einen Ruhemodus geht, die Wahrscheinlichkeit reduziert werden, dass zu diesen Zeitpunkten bzw. in diesen Zeiträumen ein unerwünschtes Datenpaket und/oder ein Störsignal von einem dritten oder weiteren Sender, der nicht zum System gehört oder von einem Störsystem empfangen wird.

Gemäß manchen Ausführungsbeispielen kann der Empfänger ausgebildet sein, um, wenn er ein Datenpaket nicht oder nicht vollständig in einem Intervall zu dem Sendezeitpunkt bzw. einem angenommenen Empfangszeitfenster gemäß einer Information in einem vorhergehenden Datenpaket empfängt, seine Empfangsleistung zu erhöhen bzw. aufrecht zu erhalten, bis er ein nächstes Datenpaket empfängt. Dadurch kann beispielsweise eine Übertragung verbessert bzw. die Übertragungssicherheit erhöht werden. In anderen Worten ausgedrückt: Sollte der Empfänger das Datenpaket nicht oder nicht vollständig empfangen können, würde er unter Umständen auch nicht die Information über den Sendezeitpunkt des nächsten Datenpakets erhalten können. In diesem Fall kann der Empfänger aktiv bleiben, bis er ein nächstes Datenpaket empfängt. Der Empfänger kann also in einen sog. Akquisitions-Modus gehen. Dadurch kann ggf. verhindert werden, dass der Empfänger, wenn er ein Datenpaket unvollständig oder nicht empfängt, in einen Zustand mit einer reduzierten Empfangsleistung der Empfängerschaltung verbleibt und alle folgenden Datenpakete verpasst.

Zusätzlich oder alternativ kann der Empfänger ausgebildet sein, eine Empfangsleistung einer Empfängerschaltung zu reduzieren, wenn der Empfänger über einen Zeitraum, der größer als der vorbestimmte Sende- bzw. Empfangszeitraum ist, kein Datenpaket empfängt. So kann ggf. ermöglicht werden, dass der Empfänger beispielsweise, wenn er sich außerhalb eines Empfangsbereich des Senders befindet, beispielsweise in einer Kabine innerhalb eines Stadions, in einem sogenannten "Kabinenmodus" gehen kann. So kann beispielsweise verhindert werden, dass der Empfänger außerhalb des Empfangsbereichs dauerhaft aktiv bleibt und zu viel Strom verbraucht, um auf ein Datenpaket, mit der Information über den Sende- bzw. Empfangszeitpunkt für das folgende Datenpaket zu warten. Dadurch kann ermöglicht werden, dass der Empfänger, wenn er sich außerhalb des Empfangsbereichs des Senders befindet, Energie, insbesondere Batterie oder Akku spart. Dabei kann der Zeitraum, in dem nichts (Brauchbares) empfangen wird, beispielsweise um einen bestimmten Faktor größer sein als der Sendezeitraum. Der Faktor bzw. die Dauer des Zeitraums, die den sog, Kabinenmodus auslösen kann, kann dem Empfänger bekannt sein. So kann ggf. ermöglicht werden, dass der Empfänger zwischen einem Kabinenmodus und dem versehentlichen Verpassen bzw. nicht Empfangen eines Datenpakets unterscheiden kann.

Zusätzlich oder alternativ kann der Empfänger ausgebildet sein, die Empfangsleistung der Empfängerschaltung für einen Zeitraum, der länger als der vorbestimmte Sendezeitraum bzw. das vorbestimmte Sendefenster ist, zu erhöhen. Dadurch kann beispielsweise ermöglicht werden, dass wenn der Empfänger sich in einem sogenannten Kabinenmodus befindet, also die Empfangsleistung der Empfängerschaltung reduziert hat, immer wieder in einen aktiven Modus geht, um zu überprüfen, ob er Datenpakete empfangen kann. So kann der Empfänger überprüfen, ob er sich bereits wieder in einem Empfangsbereich des Senders befindet, also beispielsweise die Kabine verlassen hat.

Bei einigen Ausführungsbeispielen ist der Empfänger an einem Armband tragbar. Beispielsweise kann der Empfänger in eine Armbanduhr integriert sein. Dadurch kann ggf. ermöglicht werden, dass der Empfänger beispielsweise für einen Schiedsrichter zur Anzeige des Torerkennungsergebnisses bzw. der Anzeige der Detektion eines Ereignisses als kleines mobiles Gerät, vorzugsweise als Armbanduhr, das batteriebetrieben ist, zur Verfügung gestellt werden kann. Wie bereits beschrieben, können der Empfänger und damit auch die Armbanduhr eine energieeffiziente Funkschnittstelle aufweisen. Dadurch, dass der Empfänger in eine Armbanduhr integriert sein kann, kann ggf. ein mobiles, einfach zu tragendes und bedienendes Gerät, beispielsweise für einen Nutzer, insbesondere einen Schiedsrichter, zur Verfügung gestellt werden, das sowohl eine Uhrzeit, als auch einen Spielstand, als auch eine Detektion eines Ereignisses, beispielsweise das Ergebnis einer Torerkennung anzeigen kann.

Die in der vorstehenden Beschreibung, den nachfolgenden Ansprüchen und den beigefügten Figuren offenbarten Ausführungsbeispiele und deren Merkmale können sowohl einzeln wie auch in beliebiger Kombination für die Verwirklichung eines Ausführungsbeispiels in ihren verschiedenen Ausgestaltungen von Bedeutung sein und implementiert werden.

Einige lediglich exemplarische Ausführungsbeispiele werden nachfolgend anhand der beiliegenden Figuren näher erläutert. Es zeigen:
- Fig. 1: eine schematische Darstellung eines Senders und eines Empfängers gemäß einem Ausführungsbeispiel;
- Fig. 2: eine schematische Darstellung eines Blockdiagramms eines Verfahrens zum Versenden von Datenpaketen für ein System zum Detektieren eines Ereignisses gemäß dem Ausführungsbeispiel;
- Fig. 3: eine schematische Darstellung eines Blockdiagramms eines Verfahrens zum Empfangen von Datenpaketen für ein System zum Detektieren eines Ereignisses gemäß dem Ausführungsbeispiel;
- Fig. 4: eine schematische Darstellung eines Telegramms eines Datenpakets gemäß einem Ausführungsbeispiel zur Übertragung von Informationen eines Torerkennungssystems;
- Fig. 5: eine schematische Darstellung eines Übertragungsformats der Sendepakete gemäß einem Ausführungsbeispiel;
- Fig. 6: eine schematische Darstellung eines Zustandsdiagramms des Empfängers in einem Kabinenmodus gemäß einem Ausführungsbeispiel;
- Fig. 7: eine schematische Darstellung eines Systemüberblicks eines Torerkennungssystems mit Sendern an jedem Tor gemäß einem Ausführungsbeispiel;
- Fig. 8: eine schematische Darstellung eines Übertragungsschemas gemäß einem Zeit- und Frequenzmultiplexverfahren für die Übertragung von Informationen aus einem Torerkennungssystem gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch ggf. auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

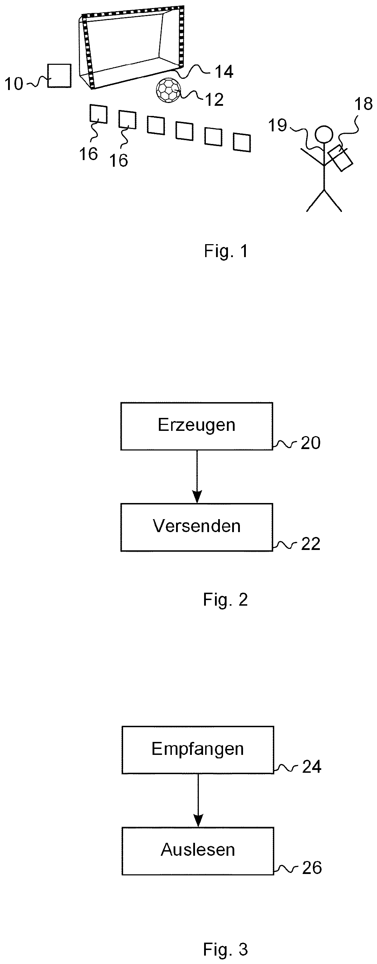

Fig. 1 zeigt eine schematische Darstellung von Ausführungsbeispielen eines Senders 10 und eines Empfängers 18 für ein System zum Detektieren eines Ereignisses entsprechend einer Überquerung eines beweglichen Objekts 12 über eine überwachte Linie 14. Das heißt, Sender und Empfänger können mit einem Ereigniserkennungssystem, wie z.B. einem Torerkennungssystem, gekoppelt sein.

Gemäß einem Ausführungsbeispiel ist das System zum Detektieren eines Ereignisses ausgebildet, einen Durchgang des beweglichen Objekts 12, beispielsweise eines Balles oder Pucks, durch eine Erfassungsebene (z.B. eine Torebene), in der die überwachte Linie 14 liegt, unter Verwendung elektromagnetischer Felder und/oder Signale zu erfassen. Bei manchen Ballsportarten, beispielsweise Fußball bzw. Soccer oder Football, wird die Verwendung von automatischen Torschuss-Erfassungssystemen diskutiert, um menschliche Fehlentscheidungen zu vermeiden. Die sogenannte Torlinientechnik (Goal Line Technology) ist dabei eine Technik, die bestimmen kann, wann der Ball 12 die Torlinie 14 gekreuzt hat, und unterstützt den Schiedsrichter bei der Entscheidung, ob ein Tor gefallen ist oder nicht.

Dabei gibt es verschiedene alternative Ansätze zur Bestimmung der exakten Position oder der Stelle, wo sich der Ball 12 genau befindet, beispielsweise auf Video basierende Systeme oder auf einem elektromagnetischen Feld basierende Systeme.

In einem Ausführungsbeispiel eines Systems, das auf Video basiert bzw. oder ein kamerabasiertes Ereigniserkennungssystem ist, können beispielsweise verschiedene Perspektiven einer Szene ausgewertet werden.

In einem Ausführungsbeispiel eines Systems, das auf einem elektromagnetischen Feld basiert, kann das bewegliche Objekt 12, beispielsweise ein Ball, mit einer elektronischen Schaltung versehen sein, um elektromagnetische Signale zu senden und/oder zu empfangen und/oder zu reflektieren. Für solche elektromagnetischen Ansätze sind elektronische Komponenten innerhalb des Balles 12 erforderlich, wobei die Größe der Elektronik je nach ihrer Funktionalität und dem genutzten Frequenzbereich verschieden sein kann. Bei kleinen und mittleren Systemen kann die Elektronik beispielsweise in der Mitte des Balles 12 installiert sein. Bei Torschuss-Erfassungssystemen, die mehr Platz und Volumen brauchen, beispielsweise bei Systemen, die Magnetfelder im Sub-MHz-Bereich nutzen, können erforderliche Loop- bzw. Schleifenantennen und/oder die weiteren elektronischen Komponenten am Umfang des Balles 12 installiert sein.

Um Erfassungseigenschaften zu erreichen, die möglichst rotationsunabhängig sind, wird für das System zum Detektieren bzw. das Torschuss-Erfassungssystem die Installierung von drei orthogonal angeordneten Spulen oder Schleifenantennen in oder an dem beweglichen Objekt 12, z.B. einem Ball, vorgeschlagen, um zumindest einen Teil eines elektromagnetischen Felds, welches beispielsweise am Tor erzeugt wird, zu emittieren oder zu reflektieren. Aufgrund dieser orthogonalen Anordnung der Spulen hat die Drehstellung des Balles 12 einen nur geringen Einfluss auf die elektromagnetischen Emissions- oder Reflektionseigenschaften, da die drei orthogonalen Loop-Antennen theoretisch eine effektive Schleifenantenne ergeben, deren effektive Öffnungsfläche senkrecht zu einem einfallenden Magnetfeld ist, das von einem (Magnetfeld-) Sender kommt, der am oder nahe am Tor installiert ist. Das heißt, die Normale der effektiven Öffnungsfläche der effektiven Schleifenantenne ist im Wesentlichen parallel zum Magnetfeldvektor.

Für eine korrekte Funktion, d.h. eine hohe Genauigkeit von Torschuss-Erfassungssystemen sind die elektromagnetischen Eigenschaften des Balles oder eines Pucks von entscheidender Bedeutung. In einem Ausführungsbeispiel für ein Torschuss-Erfassungssystem kann ein Magnetfeld mittels eines stromführenden Leiters erzeugt werden, der um einen Torrahmen herum läuft. Das erzeugte Magnetfeld ist dabei senkrecht zu einer Erfassungsebene, die vom Torrahmen definiert wird, und in der die Torlinie 14 liegt. Dieses stimulierende Magnetfeld wird vom Ball 14 reflektiert, wobei das reflektierte Signal den gleichen Richtungsvektor erzeugen sollte wie das stimulierende Feld (aufgrund der Ballelektronik mit einer Phasenverschiebung). Die geometrische Genauigkeit des reflektierten Signals beeinflusst direkt das Messergebnis und somit die Genauigkeit der Torentscheidung.

Das Erfassungssystem basiert auf drei orthogonalen Spulen im Ball 12. Jede der Spulen kann eine Mehrzahl von Windungen umfassen, die beispielsweise zwischen die Blase des Balles und die Außenhaut oder das Deckmaterial des Balles eingeführt sind. Um eine angemessene Qualität einer Resonanzspule in dem Ball zu erhalten, sollte der Durchmesser der Spule(n) so groß wie möglich sein, was bedeutet, dass die Spulen in oder unter dem Deckmaterial des Balles installiert sein können.

Es soll allerdings betont werden, dass gemäß anderen Ausführungsformen auch andere Linien als Torlinien überwacht werden können, wie z.B. Seitenauslinien, Strafraumlinien, oder ähnliches.

Der Sender 10, welcher mit dem Erfassungssystem gekoppelt ist, um von diesem Detektionssignale zu erhalten, ist gemäß Ausführungsbeispielen ausgebildet, um unabhängig von einem Auftreten des Ereignisses (z.B. "Tor"), an einen Empfänger 18 aufeinanderfolgende Datenpakete 16 zu versenden, derart, dass jedes der Datenpakete 16 eine Information über eine Anzahl von aufgetretenen Ereignissen bis zu einem Sendezeitpunkt des Datenpakets 16 aufweist, wobei die Sendezeitpunkte von aufeinander folgenden Datenpaketen 16 jeweils in einem vorbestimmten Sendezeitraum liegen. Optional kann jedes der Datenpakete 16 eine Information über den Sendezeitpunkt des jeweiligen Datenpakets 16 aufweisen. Dabei meint der vorbestimmte Sendezeitraum nicht eine Zeitdauer eines Datenpakets 16, sondern ein Zeitintervall, in welchem das Datenpaket 16 versendet werden kann. Das heißt, der vorbestimmte Sendezeitraum ist größer als die Zeitdauer eines Datenpakets, so dass eine gewisse Flexibilität hinsichtlich des Sendezeitpunkts für ein Datenpaket (innerhalb des vorbestimmten Sendezeitraums) entsteht.

Das Ereignis selbst soll beispielsweise innerhalbe einer maximalen Übertragungszeit mit einer maximalen Verzögerung bzw. Latenz übertragen werden. Wenn beispielsweise innerhalb der maximalen Übertragungszeit nur ein Datenpaket übertragen wird, entspricht die maximale Übertragungszeit dem Sendezeitraum. Alternativ können beispielsweise innerhalb der maximalen Übertragungszeit eine Mehrzahl von Datenpaketen übertragen werden. Dazu kann die maximale Übertragungszeit beispielsweise in eine Mehrzahl von Sendezeiträumen unterteilt werden.

Dementsprechend ist der Empfänger 18 ausgebildet, unabhängig von dem Auftreten des Ereignisses die vom Sender 10 stammenden aufeinander folgenden Datenpakete 16 zu empfangen, wobei jedes Datenpaket 16 eine Information über eine Anzahl von aufgetretenen Ereignissen bis zu einem Sendzeitpunkt des Datenpakets 16 aufweist. Die Sendezeitpunkte von aufeinander folgenden Datenpaketen 16 liegen jeweils in einem vorbestimmten Sendezeitraum. Optional kann jedes der Datenpakete 16 eine Information über den Sendezeitpunkt des Datenpakets 16 aufweisen. Demzufolge liegen auch die Empfangszeitpunkte der aufeinander folgenden Datenpakete 16 jeweils in einem vorbestimmten Empfangszeitraum. Die Empfangszeitpunkte unterscheiden sich von den Sendezeitpunkten lediglich durch eine Signallaufzeit vom Sender 10 zum Empfänger 18.

Fig. 2 zeigt eine schematische Darstellung eines Blockdiagramms eines Verfahrens zum Versenden der Datenpakete 16 gemäß dem Ausführungsbeispiel. Dabei kann das Verfahren von dem Sender 10 ausgeführt werden, sofern dieser in Betrieb ist.

Wie in Fig. 2 dargestellt, werden bei dem Verfahren zum Versenden der Datenpakete 16 in einem Verfahrensschritt 20 die aufeinander folgenden Datenpakete 16 erzeugt, derart, dass jedes der Datenpakete 16 eine Information über eine Anzahl von aufgetretenen Ereignissen aufweist bis zu einem Sendzeitpunkt des Datenpakets 16. In einem weiteren Verfahrensschritt 22 werden die aufeinander folgenden Datenpakete 16 versendet, unabhängig von einem Auftreten des Ereignisses, derart, dass Sendzeitpunkte von aufeinander folgenden Datenpaketen 16 jeweils in einem vorbestimmten Sendezeitraum liegen.

Fig. 3 zeigt eine schematische Darstellung eines Blockdiagramms eines Verfahrens zum Empfangen von Datenpaketen. Dabei kann das Empfangsverfahren von dem Empfänger 18 ausgeführt werden, sofern dieser in Betrieb ist.

Das Empfangsverfahren umfasst als Verfahrensschritt 24 das Empfangen von aufeinander folgenden Datenpaketen 16, unabhängig von einem Auftreten des Ereignisses, deren Sende- bzw. Empfangszeitpunkte jeweils in einem vorbestimmten Sende- bzw. Empfangszeitraum liegen. Als weiteren Verfahrensschritt 26 umfasst das Verfahren das Auslesen der Datenpakete 16, wobei jedes der Datenpakete 16 eine Information über eine Anzahl von aufgetretenen Ereignissen bis zu einem Sendzeitpunkt des Datenpakets aufweist. Optional kann das Datenpaket 16 eine Information über den Sendezeitpunkt des Datenpakets 16 aufweisen. Das heißt, beim Auslesen 26 wird beispielsweise die Information über den Sendzeitpunkt und/oder die Information über die Anzahl der aufgetretenen Ereignisse ausgelesen, so dass sie anschließend ausgewertet werden kann.

Im Folgenden wird ohne Beschränkung der Allgemeinheit insbesondere auf Ausführungsbeispiele eingegangen, bei denen es sich bei dem System zum Detektieren des Ereignisses um ein Torerkennungssystem handelt. Entsprechend ist das Ereignis ein Tor, bzw. eine Überquerung eines Balls als Objekts 12 über eine Torlinie als überwachte Linie 14.

Durch das Versenden der aufeinanderfolgenden Datenpakete 16 kann beispielsweise ermöglicht werden, dass die Information, ob ein Tor detektiert wurde oder nicht, innerhalb einer relativ kurzen Zeit an den Empfänger 18 übertragen wird. Bei dem vorliegenden Ausführungsbeispiel, führt ein Schiedsrichter 19, der sich auf dem Spielfeld bewegen kann, den Empfänger 18 als mobile Einheit, beispielsweise an einem Armband oder in eine Armbanduhr integriert, mit sich, wie in Fig. 1 gezeigt. Dem Schiedsrichter 19 kann die Information, ob das Torerkennungssystem ein Tor detektiert hat, für seine Entscheidung zeitnah zur Verfügung gestellt werden. Ferner wird beispielsweise dadurch, dass die Datenpakete 16 unabhängig von dem Ereignis übertragen werden, die Informationsübertragung relativ abhörsicher ermöglicht, sodass nur der Schiedsrichter 19 die Information erhält und nur er über die Detektion des Ereignisses bzw. das Erkennungsergebnis informiert wird. Mit anderen Worten ausgedrückt bedeutet dies, dass die Information so übertragen werden kann, dass weder aus dem Zeitpunkt der Übertragung noch aus der übertragenen Datenmenge auf ein detektiertes Ereignis bzw. ein stattgefundenes Torereignis geschlossen werden kann. Zusätzlich oder alternativ kann das Datenpaket 16 verschlüsselt bzw. codiert übertragen werden. Nur aus dem entschlüsselten Dateninhalt bzw. Datenpaket kann dann beispielsweise auf die Detektion des Ereignisses bzw. das Torereignis geschlossen werden.

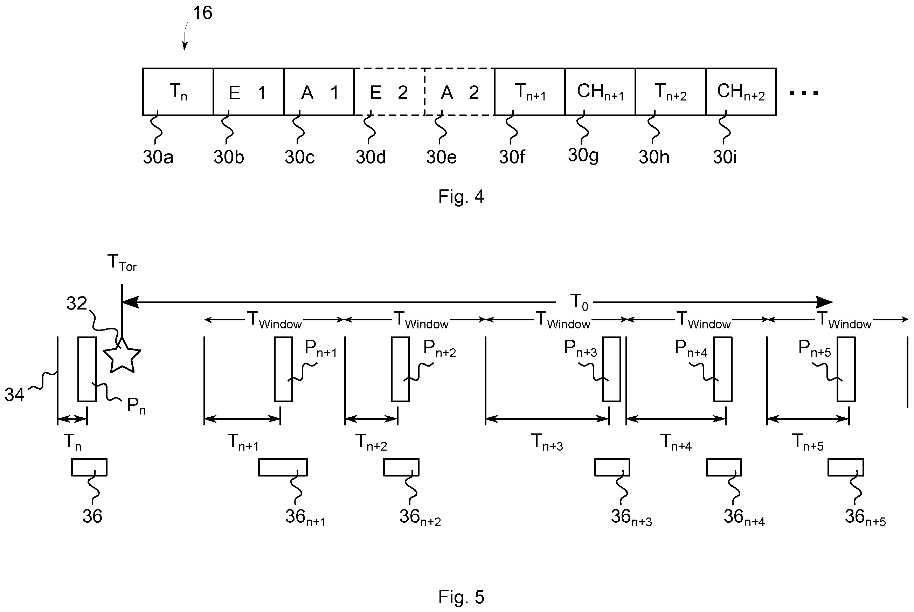

Fig. 4 zeigt eine schematische Darstellung eines Paket- bzw. Telegrammaufbaus für die Übertragung der Information des Torerkennungssystems.

Wie in Fig. 4 gezeigt, kann ein Datenpaket 16 bzw. dessen Telegramm eine Mehrzahl von Datenfeldern 30a bis 30i umfassen. Das Datenpaket 16, das auch n-tes Sendepaket genannt werden kann, umfasst, wie in Fig. 4 erkennbar, in dem Datenfeld 30a optional eine Information über den Sendzeitpunkt Tₙ. Beispielsweise kann die Zeit Tₙ in Sekunden oder Millisekunden angegeben werden. Die Zeit bzw. der Sendzeitpunkt Tₙ kann von einem definierten Null-Zeitpunkt (z.B. Datum und Uhrzeit) aus gemessen werden, der dem Sender 10, dem Empfänger 18 und/oder dem gesamten System bekannt ist. Ferner umfasst das Datenpaket 16 im Datenfeld 30b eine Information über die Anzahl der aufgetretenen Ereignisse E1. Im vorliegenden Ausführungsbeispiel ist die Information E1 ein Zählerstand bzw. ein Torzähler. Andere Ausführungsformen sind ebenfalls denkbar. Ferner umfasst das Datenpaket 16 in einem weiteren optionalen Datenfeld 30c eine Information zum Alter A1 des Ereignisses E1, also eine Information zum Alter des Torzählerstands. Die Information A1 kann dabei beispielsweise ein Zeitstempel oder ein Zeitwert oder ein Zählwert sein, der angibt, wie viele Datenpakete 16 das Ereignis, bzw. die Erhöhung der Anzahl E1 der Ereignisse zurückliegt. Aufgrund der Altersinformation kann der Empfänger 18 beispielsweise selbstständig entscheiden, ob eine im Moment erhaltene Information noch aktuell ist und einem Nutzer, beispielsweise dem Schiedsrichter 19, angezeigt werden soll.

Optional umfasst das Datenpaket 16 in den Datenfeldern 30f bis 30i weitere Informationen zu Funkressourcen, die das nächste und übernächste gesendete Datenpaket, d.h. zukünftige Datenpakete, betreffen. Bei dem vorliegenden Ausführungsbeispiel weist das optionale Datenfeld 30f einen Sendezeitpunkt Tₙ₊₁ des nächsten Datenpakets und das optionale Datenfeld 30g einen (Frequenz-) Kanal des nächsten Datenpakets CHₙ₊₁ auf. In dem optionalen Datenfeld 30h weist das Datenpaket 16 eine Information zu dem Sendezeitpunkt Tₙ₊₂ des übernächsten Datenpakets und in dem optionalen Datenfeld 30i eine Information zu dem Kanal CHₙ₊₂ des übernächsten Datenpakets auf.

Informationen zu den Funkressourcen, wie in den Datenfeldern 30f bis 30i enthalten, können in dem Datenpaket 16 direkt oder indirekt enthalten sein und z. B. über pseudozufällig generierte Sequenzen entstanden sein. Der Wert Tₙ₊₁ bzw. Tₙ₊₂ ist vorzugsweise ein Zeitabstand zu dem nächsten Sendezeitpunkt oder der nächste Sendzeitpunkt selbst. Der nächste Sendezeitpunkt liegt dabei in einem darauffolgenden vorbestimmten Sendezeitraum bzw. - intervall. Die Funkressourcen bezüglich des Kanals können optional in dem Datenpaket 16, beispielsweise bei Frequenzspreizung (z.B. FHSS = Frequency Hopping Spread Spectrum), enthalten sein und einen Übertragungskanal des nächsten Sendepakets oder des übernächsten Sendepakets angeben.

Ergänzend oder alternativ und in Fig. 4 gestrichelt dargestellt, kann das Datenpaket 16 in einem weiteren Ausführungsbeispiel auch Informationen über ein zweites Ereignis E2 in dem Datenfeld 30d und analog zu dem vorhergehend beschriebenen Ausführungsbeispiel eine Information zu einem Alter A2 in dem Datenfeld 30e des zweiten Ereignisses E2 aufweisen. Bei dem vorliegenden Ausführungsbeispiel ist das Ereignis E2 in dem Datenfeld 30d ein Torzähler oder Zählerstand hinsichtlich eines zweiten Tores.

Fig.5 zeigt eine schematische Darstellung eines Übertragungsformats von Daten- bzw. Sendepaketen gemäß einem Ausführungsbeispiel.

Wie in Fig. 5 dargestellt, wird ein erstes Datenpaket mit der Bezeichnung Pₙ zu dem Sendezeitpunkt Tₙ versendet. Der Sendezeitpunkt Tₙ kann dabei als ein Zeitraum von einem vorbestimmten Zeit-Null- oder Bezugspunkt 34 aus angegeben werden oder kann ein absoluter Zeitwert sein. Zu einem Zeitpunkt T_{Tor} wird ein Torereignis bzw. ein Tor 32 detektiert. Daraufhin, wird der Torzähler E1 in dem Datenfeld 30b des entsprechenden Tors inkrementiert und in dem nächsten Datenpakt Pₙ₊₁ bzw. in dem Telegramm des nächsten Datenpakets Pₙ₊₁ aktualisiert. Das nächste Datenpaket Pₙ₊₁ weist also eine Anzahl E1 an Torereignissen auf, die gegenüber der in dem Datenpaket Pn übermittelten Anzahl E1 erhöht ist. Zwischen den beiden Datenpaketen Pₙ₊₁ und Pₙ₊₂ kann, wie in Fig. 5 dargestellt, eine maximale Verzögerung T_{Window} eingehalten werden. Dadurch kann eine gewisse Gleichverteilung, um beispielsweise einen geforderten Sender Duty Cycle (Tastgrad), welcher einem Anteil tatsächlicher Sendezeiten im Verhältnis zur Gesamtzeit bzw. dem vorbestimmten Sendezeitraum entspricht (Sender Duty Cycle = Anteil Sendezeiten / Gesamtzeit), eingehalten werden. In anderen Worten gibt der Tastgrad für eine periodische Folge von Impulsen (entsprechend den Datenpakten 16) das Verhältnis der Impulsdauer (Datenpaketdauer) zur (mittleren) Impulsperiodendauer (entsprechend dem vorbestimmten Sendezeitraum) an. Der Tastgrad wird üblicherweise als dimensionslose Verhältniszahl mit einem Wert von 0 bis 1 oder 0 bis 100 % angegeben. Beispielsweise wird dazu der Sendedatenstrom in gleich große, vorbestimmte Zeitfenster T_{Window} unterteilt. Im vorliegenden Ausführungsbeispiel wird eine definierte Zeit T₀ (z. B. eine Sekunde), innerhalb der das Torereignis übertragen werden soll, in die gleich großen Zeitfenster T_{Window} unterteilt, wobei T_{Window} = T₀ / k ist. Im vorliegenden Ausführungsbeispiel sind dabei folgende Werte gewählt: T_{Window} = 200 ms, T₀ = 1s, k = 5. In weiteren nicht dargestellten Ausführungsbeispielen kann T_{Window} in einem Bereich von 1ms bis 1s, T₀ in einem Bereich von 100 ms bis 10s, und k in einem Bereich von 1 bis 100 liegen.

Mit anderen Worten ausgedrückt, wird jedes der Datenpakete Pₙ, Pₙ₊₁, Pₙ₊₂, etc. innerhalb eines vorbestimmten Sendezeitraums T_{Window} versendet. Innerhalb dieses Zeitfensters der Länge T_{Window} kann der eigentliche Sendzeitpunkt von dem Sender 10 zufällig und/oder variabel gewählt werden, aber immer so, dass das Versenden des Datenpakets bis zum Ende des jeweiligen Zeitfensters T_{Window} abgeschlossen ist. Das Datenpaket Pₙ zu dem Zeitpunkt Tₙ enthält gemäß manchen Ausführungsbeispielen mindestens einen nächsten Sendzeitpunkt Tₙ₊₁ des nächsten Sendepakets Pₙ₊₁.

In weiteren nicht dargestellten Ausführungsbeispielen kann die definierte Zeit, innerhalb der das Ergebnis übertragen werden soll, einen anderen Wert aufweisen, der in mehr oder weniger Abschnitte k unterteilt ist.

Die Information über die Anzahl der Ereignisse E1 bzw. das Datenpaket 16 kann durch die Aufteilung in mehrere kürzere Sendezeiträume k-mal, also beim vorliegenden Ausführungsbeispiel 5-mal, innerhalb der geforderten Übertragungszeit T₀ gesendet werden. Da mit jedem Datenpaket 16 dem Empfänger 18 auch der Sendzeitpunkt Tₙ₊₁ bzw. Tₙ₊₂ des nächsten Datenpakets mitgeteilt wird, kann der Empfänger 18 einen Empfangszeitraum bzw. ein Empfangszeitfenster 36 des nächsten Datenpakets abschätzen. Ein Empfangszeitpunkt wird um eine Signallaufzeit von Sender 10 zu Empfänger 18 hinter dem dazu korrespondierenden Sendezeitpunkt liegen. Dadurch kann der Empfänger 18 entsprechend zu den abgeschätzten Empfangszeitpunkten bzw. -fenstern 36 bzw. den dazwischen liegenden Bereichen, in denen keine Datenpakete erwartet werden, eine Empfängerleistung eines Empfängerschaltkreises reduzieren und dadurch Strom sparen. Rechtzeitig zu Beginn eines erneuten, folgenden Empfangszeitfensters kann der Empfänger 18 die Empfängerleistung des Empfangsschaltkreises wieder erhöhen bzw. aktivieren, um das Datenpaket zu erhalten bzw. zu empfangen. Dadurch kann beispielsweise der Stromverbrauch des Empfängers 18 reduziert werden. Dadurch kann der Empfänger 18 ggf. batteriebetrieben mit einer vergleichsweise kleinen Energiespeichereinheit bzw. Batterie ausgebildet werden. Mit anderen Worten ausgedrückt, da gemäß einigen Ausführungsbeispielen der mindestens nächste Sendzeitpunkt des Datenpakets dem Empfänger mitgeteilt wird, kann dieser rechtzeitig vorher die Empfangsleistung seiner Empfängerschaltung erhöhen, bzw. aktivieren, beispielsweise einen HF-Empfangsschaltkreis (HF = Hochfrequenz) aktivieren und ggf. unmittelbar nach dem Empfang des gesamten Datenpakets wieder deaktivieren. Ein von dem Sender 10 und dem Empfänger 18 genutzter Frequenzbereich kann beispielsweise im 2.4 GHz Band liegen.

Um eine sichere Übertragung des Torereignisses 32 zu ermöglichen, würde es ausreichen, wenn der Empfänger 18 einmal innerhalb der geforderten maximalen Übertragungszeit ein Datenpaket 16 empfängt. Da zudem nicht das Torereignis 32 an sich, sondern immer der Torzählerstand übertragen wird, könnte der Empfänger 18 auch noch zu einem späteren Zeitpunkt außerhalb der Übertragungszeit T₀ feststellen, ob ein Torereignis 32 stattgefunden hat.

Wenn der Empfänger 18 ein Datenpaket 16 empfangen hat und darin die Sendzeitpunkte Tₙ₊₁ bzw. Tₙ₊₂ der nächsten Datenpakete, insbesondere der Sendepakete k-1 erhalten hat, kann der Empfänger 18 gemäß einem Ausführungsbeispiel für die nächsten zwei Sendzeiträume T_{Window} eine Empfangsleistung seiner Empfängerschaltung reduzieren bzw. sich schlafen legen und beispielsweise Strom sparen. Unter der Annahme, dass das nächste Datenpaket vollständig korrekt empfangen wird, würde die Information über das Torereignis noch innerhalb der geforderten Übertragungszeit T₀ an den Empfänger 18 übertragen werden bzw. würde der Empfänger 18 die Information erhalten.

Bei einigen weiteren möglichen Ausführungsbeispielen legt sich der Empfänger 18 jedoch nicht so lange schlafen bzw. reduziert die Empfangsleistung der Empfängerschaltung derart, dass er gerade noch ein Datenpaket empfängt, sondern bleibt so lange aktiv bzw. steuert die Empfangsleistung der Empfängerschaltung, dass er die Möglichkeit hat, mehrere Datenpakete innerhalb der maximalen Übertragungszeit T₀ zu empfangen.

Sollte der Empfänger 18 ein Datenpaket nicht oder nicht vollständig empfangen können, kann er ggf. auch nicht die Information über den Sendzeitpunkt des nächsten Datenpakets erhalten. Um zu verhindern, dass der Empfänger 18 in einem solchen Fall die Empfangsleistung der Empfängerschaltung nicht wieder erhöht, kann der Empfänger 18 aktiv bleiben bzw. die Empfangsleistung der Empfängerschaltung aktiv halten, bis er ein weiteres Datenpaket Pₙ₊ᵢ vollständig mit einem korrekten Sendzeitpunkt für das folgende Datenpaket erhält. Mit anderen Worten ausgedrückt kann der Empfänger 18 in einen sog. Acquisition-Modus gehen.

Bei weiteren, nicht dargestellten Ausführungsbeispielen können beispielsweise, um auch in Störfällen die Information über das Torereignis 32 bzw. die Anzahl über die Torereignisse zuverlässig zu übertragen, Sendepakete 16 von dem Sender 10 in kürzeren Abständen und damit häufiger übertragen werden.

Bei weiteren Ausführungsbeispielen kann die Länge bzw. Dauer der Sendzeiträume T_{Window} auch an eine momentane Spielsituation angepasst werden. Beispielsweise können die Sendezeiträume eine kürzere Dauer aufweisen, wenn der Ball sich näher an dem Tor befindet und demgegenüber einen größeren Sendezeitraum bzw. eine längere Dauer aufweisen, wenn der Ball aus dem Spiel und/oder weiter von dem Tor entfernt ist.

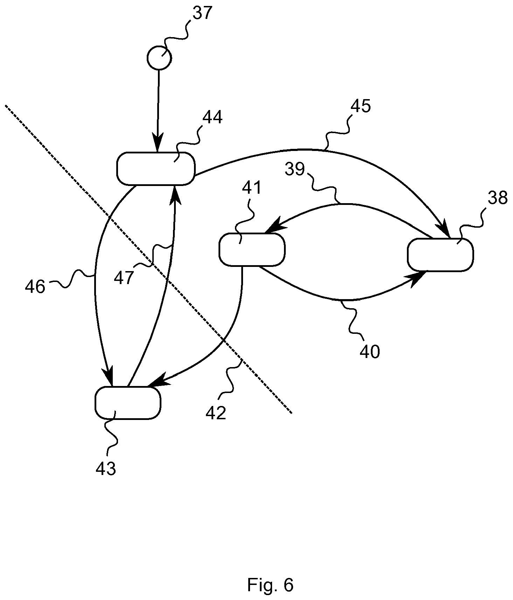

Fig. 6 zeigt eine schematische Darstellung eines Zustandsdiagramms des Empfängers gemäß einem Ausführungsbeispiel.

Wie in Fig. 6 schematisch dargestellt, kann der Empfänger 18 bzw. eine Uhr, in die der Empfänger 18 integriert sein kann, in zwei unterschiedlichen Moden arbeiten, nämlich dem bereits beschriebenen Acquisition-Modus und einem sog. Tracking-Modus.

Wenn sich der Empfänger 18 außerhalb eines Empfangsbereichs des Senders 10, beispielsweise in einer Kabine befindet, würde der batteriebetriebene Empfänger 18 dauerhaft aktiv bleiben und Strom verbrauchen, weil er kein Datenpaket mit dem Sendezeitpunkt eines folgenden Datenpakets empfängt. Dadurch würde der Stromverbrauch des Empfängers 18 erhöht werden. Der Empfänger 18 könnte nicht Strom sparend ausgebildet sein. Deshalb ist der Empfänger 18 ausgebildet, nach einer gewissen Zeit T_{Timeout-Start}, die einem Vielfachen des Sendezeitraums T_{Window} entsprechen kann, und während der keine Datenpakete empfangen werden, eine Empfangsleistung der Empfängerschaltung zu reduzieren bzw. in einen sog. "Kabinenmodus" zu schalten. Mit anderen Worten kann der Empfänger 18 nach einer gewissen Zeit, die größer als T_{Window} ist, und während der keine Datenpakete empfangen werden, in einen nicht aktiven Zustand übergehen. Dabei ist die bestimmte Zeit, die den Kabinenmodus auslöst, T_{Timeout-Start} deutlich größer als T_{Window}, beispielsweise um einen definierten Wert, der dem Empfänger bekannt ist. So kann ggf. ermöglicht werden, dass der Empfänger zwischen dem Verpassen eines Datenpakets und dem Zustand, dass er sich außerhalb des Empfangsbereichs des Senders 10 befindet und eine ganze Zeit lang kein Datenpaket empfangen kann, unterscheiden kann.

In dem Kabinenmodus kann vorgesehen sein, dass der Empfänger 18 nicht dauerhaft inaktiv ist, sondern nur für einen Zeitraum T_{Timeout-Cabine-Off}, der länger ist als ein Sendezeitfenster T_{Window}. Das heißt, der Empfänger kann immer wieder für bestimmte Zeiträume in einen aktiven Modus schalten bzw. für die Dauer eines Sendezeitraums T_{Window} oder für einen Zeitraum, der etwas länger als ein Sendezeitraum ist, um zu überprüfen, ob er sich bereits wieder in einem Empfangsbereich des Senders 10 befindet und er Datenpakete empfangen kann.

Wie in Fig. 6 dargestellt, kann der Empfänger aus einem Anfangszustand 37, wenn er innerhalb des Sendezeitraums bzw. zu dem Sendzeitpunkt den das aktuelle Datenpaket für das nächste zu erwartende Datenpaket mitgeteilt hat bzw. den daraus resultierenden Empfangsintervallen, kein Datenpaket erhält, in einen Acquisition-Modus 44 wechseln und aus diesem Acquisition-Modus 44, wenn er für eine Zeitdauer 45 kein Datenpaket empfängt in den Kabinenmodus und einem inaktiven, bzw. ausgeschalteten Zustand 38. Dieser Zustand kann "Cabine-Off" genannt werden. Nach einer Zeitdauer T_{Timeout-Cabine-Off}, angedeutet durch den Pfeil 39 kann der Empfänger 18 in einen so genannten "Cabine-On"-Modus wechseln, also einen sog. aktiven Kabinenmodus 41. In dem aktiven Kabinenmodus 41, kann der Empfänger überprüfen, ob er sich bereits wieder in einem Bereich befindet, in dem er Datenpakete empfangen kann. Dazu kann der Empfänger 18 immer wieder in bestimmten Zeitabständen seine Empfangsleistung seiner Empfängerschaltung erhöhen bzw. aktivieren, wie bereits beschrieben. Wenn der Empfänger 18 in dem aktiven Kabinenmodus 41 keine Datenpakete empfängt, kann er, wie durch den Pfeil 40 angedeutet, wieder in den inaktiven Kabinenmodus 38 zurück wechseln.

Wenn der Empfänger 18 in seinem Acquisition-Modus 44 innerhalb eines Intervalls bzw. einem Empfangszeitfenster, das dem vorher durch Datenpakete angekündigten Sendezeitpunkt eines nächsten Datenpakets entspricht bzw. korrespondiert, ein Datenpaket empfängt, kann der Empfänger 18, wie durch den Pfeil 46 angedeutet, in einen sog. Tracking-Modus 43 wechseln und sich für eine bestimmte Zeitdauer TimeOutTrack, wie mit dem Pfeil 47 angedeutet, in einen Ruhemodus begeben bzw. die Empfangsleistung seiner Empfängerschaltung reduzieren, um nicht zu viel Strom zu verbrauchen, bis zu dem nächsten Empfangszeitfenster bzw. Empfangsintervall des nächsten Datenpakets. Auch von dem "Cabine-On"-Modus, also dem sog. aktiven Kabinenmodus 41 kann der Empfänger 18, wie mit der gestrichelten Linie 42 angedeutet, in den sog. Tracking-Modus 43 gehen, wenn er ein Datenpaket, mit einem Sendezeitpunkt des nächsten Datenpakets erhält.

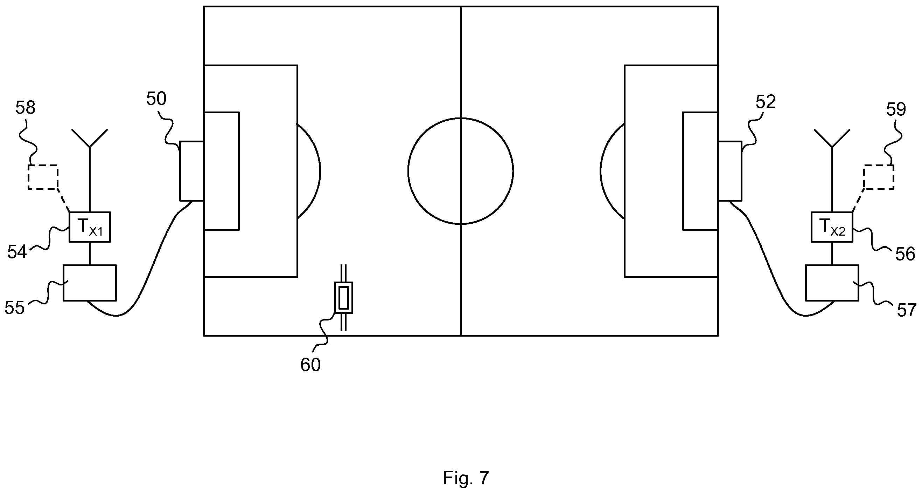

Fig. 7 zeigt eine schematische Darstellung eines Systemüberblicks eines Torerkennungssystems mit Sendern an jedem Tor, gemäß einem Ausführungsbeispiel.

Wie in Fig. 7 dargestellt, umfasst das System des vorliegenden Ausführungsbeispiels ein erstes Tor 50 und ein zweites Tor 52. Dem ersten Tor 50 ist ein erster Sender 54 und dem zweiten Tor 52 ein zweiter Sender 56 zugeordnet. Der zweite Sender 56 kann beispielsweise als Repeater dienen bzw. nach dem Prinzip eines Repeater funktionieren. Fig. 7 zeigt ein Ausführungsbeispiel, bei dem der Sender 54 einem Torerkennungssystem 55 zugeordnet ist und der Sender 56 als einem Torerkennungssystem 57zugeordnet ist. Der Sender 54 kann ggf. auf Ressourcen, beispielsweise Funkressourcen des Senders 56 bzw. die Ressourcen der Datenpakete des Senders 56 zugreifen.

Mit anderen Worten ausgedrückt, bedeutet dies, dass ein Empfänger 60, der beispielweise von einem Schiedsrichter getragen wird, Torereignisse bzw. eine Anzahl von Torereignissen von dem ersten Sender 54 und dem zweiten Sender 56 empfangen kann. Damit die Datenpakete der Sender 54 und 56 nicht kollidieren, können die Sender 54 und 56 beispielsweise untereinander synchronisiert sein.

Um beispielsweise ein Zeitmultiplexverfahren zu ermöglichen, kann der Sendeframe, also die maximale Übertragungszeit T₀, in eine doppelte Anzahl (2xk), im Vergleich zum Ausführungsbeispiel der Fig. 5, von Sendezeiträumen bzw. Sendefenstern unterteilt werden. Der Sender 54 sendet beispielsweise in den Sendezeiträumen bzw. Zeitfenstern mit einer ungeraden Nummerierung, der Sender 56 sendet beispielsweise in den Sendezeiträumen bzw. Zeitfenstern mit einer geraden Nummerierung (TDMA). Innerhalb der Sendezeitfenster bzw. der Sendezeiträume kann jeder der Sender 54 oder 56 einen variablen Zeitpunkt bzw. Sendezeitpunkt zum Versenden der Datenpakete zufällig wählen.

Gemäß einem weiteren Ausführungsbeispiel kann in jedem der Sender 54 und 56 ein Empfänger integriert sein bzw. kann der Sender 54 ein Empfangsmodul 58 aufweisen und der Sender 56 ein Empfangsmodul 59 aufweisen. Alternativ kann auch nur einer der beiden Sender ein Empfangsmodul aufweisen. Das Empfangsmodul 58 ist dabei angepasst, Datenpakete von dem Sender 56, beispielsweise in einem Zeitmultiplexverfahren, zu empfangen. Jeder der Sender 54 und 56 bzw. deren Empfängermodule 58 und 59 empfangen während ihrer eigenen Sendepause die Datenpakete des anderen Senders. Ergänzend oder alternativ können die Sender 54 und 56 statt zu unterschiedlichen Sendzeitpunkten auch auf unterschiedlichen Frequenzkanälen senden. Dadurch könnte ggf. erreicht werden, dass sich die Sender 54 und 56 nicht stören, wenn sie zu gleichen Zeitpunkten senden.

Der Sender 54 kann die Information über einen Torzählerstand des Tors 52 aus einem empfangenen Datenpaket des Senders 56 in sein aktuelles Datenpaket übernehmen. Dies kann der Sender 56 analog für den Torzählerstand des Tors 50 ausführen. So kann ermöglicht werden, dass die Datenpakete des Senders 54 und/oder auch die Datenpakete des Senders 56 den Torzählerstand des Tors 50 und auch den Torzählerstand des Tors 52, also Informationen zu zwei unterschiedlichen Ereignissen, aufweisen. Dies kann beispielsweise zu einem redundanten Signalübertragungsweg führen. Da sich die Sender 54 und 56 gegenüberstehen und ggf. ihre Position zueinander nicht verändern und/oder auch eine gute Antenne aufweisen können, kann die Übertragung von Datenpaketen zwischen den Sendern ggf. sehr sicher sein und einen zuverlässigen Informationsaustausch zwischen den beiden Sendern 54 und 56 über den Torzählerstand der Tore 50 und 52 ermöglichen. Damit kann der Informationsaustausch zwischen den feststehenden Sendern 54 und 56 sicherer sein als zwischen einem Sender 54 oder 56 und dem Empfänger 60, da sich der Empfänger 60 bei dem vorliegenden Ausführungsbeispiel normalerweise mit dem Schiedsrichter bzw. der Armbanduhr, in die er integriert sein kann, bewegt. Dadurch kann sich die Empfangssignalstärke mit einem Abstand des Empfängers 60 zu den Sendern 54 oder 56 verändern. Da sich der Schiedsrichter bzw. der Empfänger 60 jedoch zwischen den Sendern 54 und 56 bewegt, kann davon ausgegangen werden, dass wenn die Signalstärke von dem Sender 56 für den Empfänger 60 abnimmt, sich der Empfänger 60 in einem Bereich befindet, in dem die Signalstärke des anderen Senders 54 stärker ist, sodass er dessen Datenpakete besser empfangen kann. So kann beispielsweise sichergestellt werden, dass der Empfänger 60 immer zumindest von einem der Sender 54 oder 56, je nachdem, in welchem Bereich er sich befindet, ein Datenpaket erhält, das beide Torzähler für beide Tore 50 und 52 umfasst. Ferner kann die Wahrscheinlichkeit reduziert werden, dass der Empfänger gleichzeitig in einem fading- bzw. schwundbasierten Empfangsloch der Sender 54 und 56 steht.

Ferner besteht auch die Möglichkeit, dass, wenn der Empfänger 60 ein Datenpaket von dem Sender 54 empfangen hat, der Empfänger 60 auf das Datenpaket des Senders 56 verzichten kann. Beispielsweise kann der Sender 54 seine Datenpakete so erzeugen, dass diese auch die Sendezeitpunkte des nächsten Datenpakets des zweiten Senders 56 aufweisen. Der Empfänger 60 kann also eine Empfangsleistung seiner Empfängerschaltung reduzieren, bis über diesen Sendezeitraum bzw. den entsprechenden Empfangszeitraum hinaus, um Strom zu sparen. Um sicherzustellen, dass die Information über die Funkressourcen des nächsten Datenpakets des Senders 56 in dem Sendepaket des Senders 54 aktuell sind, können die Sendepakete jeweils zumindest eine Information zum Alter A1, wie in Fig. 4 im Datenfeld 30c dargestellt, oder sogar eine zusätzlich Information zu dem Alter aufweisen. In dem vorliegenden Ausführungsbeispiel gibt das Alter an, wie viele Datenpakete und/oder die Sendzeitpunkte die Information zurückliegt. Ist beispielsweise der Zähler Null, ist die Information aktuell. Weist der Zählerstand einen höheren Wert auf, wurde die Information entsprechend dem Zählerstand in der Vergangenheit empfangen. Der Empfänger 60 würde sich dann nicht schlafen legen bzw. in einen Ruhemodus gehen, sondern das nächste Sendepaket des Senders 56 empfangen.

Ferner kann die Information A1 über das Alter des Torereignisses und/oder die zusätzliche Information auch dazu beitragen, dass der Empfänger 60 oder nach den Ausführungsbeispielen der Figuren 1 bis 6 der Empfänger 18 selbstständig entscheiden kann, ob die Information zu dem Torereignis noch relevant ist und angezeigt werden soll. Dies ist beispielsweise dann sinnvoll, wenn der Empfänger 60 oder 18 erst während des Spiels eingeschaltet wird oder in einer Empfangslücke, beispielsweise der Kabine, war. Ist der Torzähler gegenüber dem letzten von dem Empfänger 60 oder 18 empfangenen Datenpaket inkrementiert, liegt aber das Alter des Torzählerstands schon länger zurück, bzw. ist hoch (Zählalter > Schwellenwert), wird die Erhöhung bzw. ein Inkrementieren des Torzählerstands nicht mehr als Torereignis interpretiert und angezeigt. In diesem Fall, könnte beispielsweise davon ausgegangen werden, dass der Schiedsrichter das Torereignis bereits auf andere Art und Weise erhalten und/oder angezeigt hat.

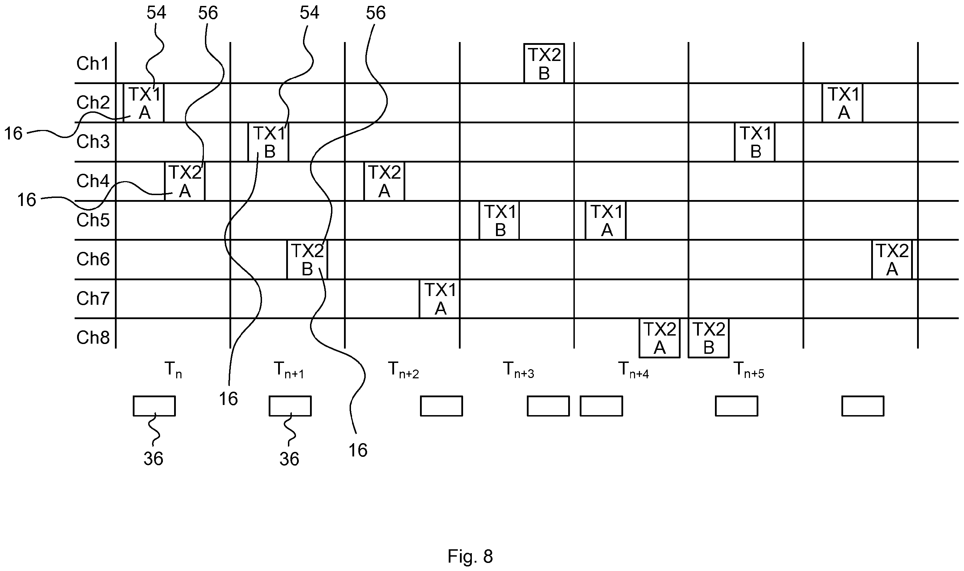

Fig. 8 zeigt eine schematische Darstellung eines Übertragungsschemas für ein Zeit- und Frequenzmultiplexverfahren für die Übertragung von Informationen aus einem Torerkennungssystem gemäß einem Ausführungsbeispiel.

Um die Sicherheit der Übertragung zu erhöhen, kann der oder können die Sender jeweils mit zwei geometrisch voneinander beabstandeten, nicht dargestellten Antennen ausgestattet werden. Die Antennen können beispielsweise über einen Wechselschalter mit dem Sender verbunden werden, nach dem Prinzip der Antennen-Diversität. Ferner können zur Erhöhung der Störsicherheit die Datenpakete zu unterschiedlichen Zeitpunkten in unterschiedlichen Frequenzkanälen übertragen werden. Bei Verwendung von zwei Sendern 54 und 56, gemäß dem Ausführungsbeispiel der Fig. 7, können die Sender 54 und 56 beispielsweise innerhalb eines Sendezeitraums oder zu einem Sendezeitpunkt auf unterschiedlichen Frequenzkanälen Ch1, Ch2, Ch3, etc. senden, ohne sich gegenseitig zu stören. Dadurch kann beispielsweise ermöglicht werden, dass die Informationen in vergleichsweise kurzer Zeit übertragen werden können. Der Sender 54 sendet beispielsweise in einem ersten Sendezeitraum oder zu einem ersten Sendezeitpunkt Tₙ auf der Frequenz bzw. dem Kanal oder Frequenzkanal Ch2. Der Sender 56 sendet in dem ersten Sendezeitraum oder zu dem ersten Sendezeitpunkt Tₙ auf der Frequenz Ch4. Aus der in dem Datenpaket übertragenen Information zu dem Sendezeitpunkt des folgenden Datenpakets kann der Empfänger 60 den Empfangszeitraum bzw. das Empfangszeitfenster 36 abschätzen. Analog senden die Sender 54 und 56 auch in dem zweiten Sendezeitraum bzw. dem zweiten Sendezeitpunkt Tₙ₊₁ auf unterschiedlichen Kanälen. Der Sender 54 sendet auf dem Kanal Ch3, der Sender 56 versendet auf dem Kanal Ch6. Wie in Fig. 8 erkennbar, können die Sender 54 und 56 ergänzend oder alternativ auch noch zu unterschiedlichen Zeitpunkten innerhalb der Sendezeiträume ihre Datenpakete 16 versenden.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist. Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch ggf. Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Sender (10; 54; 56) für ein System zum Detektieren eines Ereignisses, entsprechend einer Überquerung eines Objekts (12) über eine überwachte Linie (14), wobei der Sender (10) ausgebildet ist, unabhängig von einem Auftreten des Ereignisses, aufeinanderfolgend Datenpakete (16) zu versenden, derart, dass jedes der Datenpakete (16) eine Information über eine Anzahl (E1) von Vorkommen des aufgetretenen Ereignisses bis zu einem Sendezeitpunkt (Tₙ) des Datenpakets (16) aufweist, wobei die Sendezeitpunkte (Tₙ) von den aufeinanderfolgenden Datenpaketen (16) des Ereignisses jeweils innerhalb eines vorbestimmten Sendezeitraums (T_{WINDOW}) liegen.

2. Sender nach Anspruch 1, wobei der Sender ausgebildet ist, die Datenpakete derart zu erzeugen, dass jedes der Datenpakete (16) eine Information über den Sendezeitpunkt (Tₙ) des Datenpakets (16) aufweist.

3. Sender nach Anspruch 1 oder 2, wobei der Sender (10; 54; 56) ausgebildet ist, jedes der Datenpakete (16) derart zu erzeugen, dass das Datenpaket (16) eine Information über eine Funkresource für ein folgendes Datenpaket (16) aufweist.

4. Sender nach einem der vorhergehenden Ansprüche, wobei der Sender (10; 54; 56) ausgebildet ist, das Datenpaket (16) derart zu erzeugen, dass das Datenpaket (16) eine Information über ein Alter (A1) des aufgetretenen Ereignisses (E1) aufweist.

5. Sender nach einem der vorhergehenden Ansprüche, wobei der Sender (10; 54; 56) ausgebildet ist, jedes der Datenpakete (16) zu einem zufälligen Sendezeitpunkt (Tₙ) zu versenden, derart, dass das Datenpaket (16) innerhalb seines vorbestimmten Sendezeitraums (T_{Window}) vollständig versendet ist.

6. Sender nach Anspruch 3, wobei die Funkresource ein Sendezeitpunkt (Tₙ) und/oder eine Frequenz des folgenden Datenpakets (16) ist.

7. Sender nach einem der vorhergehenden Ansprüche, wobei der Sender (54) ausgebildet ist, in einem Multiplexverfahren mit einem zweiten Sender (56) die aufeinanderfolgenden Datenpakete (16) zu versenden, und der Sender (54) ein Empfangsmodul aufweist, das ausgebildet ist, aufeinanderfolgende Datenpakete (16) des zweiten Senders (56) zu empfangen, wobei jedes der Datenpakete(16) des zweiten Senders (56) zumindest eine Information über eine bis zu dem Sendezeitpunkt (Tₙ) aufgetretene Anzahl (E2) von zweiten Ereignissen aufweist, und der Sender (54) ausgebildet ist, die aufeinanderfolgenden Datenpakete (16) derart zu erzeugen, dass jedes Datenpaket (16) eine Information über die Anzahl (E2) der zweiten aufgetretenen Ereignisses bis zu dem Sendezeitpunkt (Tₙ) aufweist.

8. Sender nach einem der vorhergehenden Ansprüche, wobei das Ereignis ein Tor ist, entsprechend einer Überquerung eines Spielgeräts (12), insbesondere eines Balls oder eines Pucks, über eine überwachte Torlinie (14).

9. Empfänger (18; 60) für ein System zum Detektieren eines Ereignisses, entsprechend einer Überquerung eines Objekts (12) über eine überwachte Linie (14), wobei der Empfänger (18, 60) ausgebildet ist, unabhängig von dem Auftreten des Ereignisses aufeinanderfolgende Datenpakete (16) zu empfangen, wobei jedes der Datenpakete (16) eine Information über eine Anzahl (E1) von Vorkommen des aufgetretenen Ereignisses bis zu einem Sendezeitpunkt (Tₙ) des Datenpakets (16) aufweist, wobei die Sendezeitpunkte (Tₙ) von den aufeinanderfolgenden Datenpaketen (16) des Ereignisses jeweils innerhalb eines vorbestimmten Sendezeitraums (T_{WINDOW}) liegen.

10. Empfänger nach Anspruch 9, wobei jedes der Datenpakete (16) eine Information über den Sendezeitpunkt (Tₙ) des Datenpakets (16) aufweist.

11. Empfänger nach Anspruch 9 oder 10, wobei der Empfänger (18; 60) ausgebildet ist, ein Signal auszugeben, das das Ereignis anzeigt, wenn ein aktuell empfangenes Datenpaket (16) eine Information über eine Anzahl (E1) von aufgetretenen Ereignissen aufweist, die gegenüber einer Anzahl (E1) von aufgetretenen Ereignissen gemäß einem vorhergehenden Datenpaket (16) erhöht ist.

12. Empfänger nach einem der Ansprüche 9 bis 11, wobei der Empfänger (18; 60) ausgebildet ist, zwischen zwei aufeinanderfolgenden Datenpaketen (16) eine Empfangsleistung einer Empfängerschaltung zu reduzieren, basierend auf einer Information über den Sendezeitpunkt (Tₙ₊₁) des folgenden Datenpakets in dem aktuellen Datenpaket (16).

13. Empfänger nach Anspruch 12, wobei der Empfänger (18; 60) ausgebildet ist, wenn er ein Datenpaket (16) nicht oder nicht vollständig in einem Intervall zu dem Sendezeitpunkt (Tₙ₊₁) gemäß einer Information in einem vorhergehenden Datenpaket (16) empfängt, die Empfangsleistung zu erhöhen, bis er ein nächstes Datenpaket (16) empfängt.

14. Empfänger nach einem der Ansprüche 9 bis 13, wobei der Empfänger (18; 60) ausgebildet ist, eine Empfangsleistung einer Empfängerschaltung zu reduzieren, wenn der Empfänger (18, 60) über einen Zeitraum, der größer als der vorbestimmte Sendezeitraum (T_{Window}, T₀) ist, kein Datenpaket (16) empfängt.

15. Empfänger nach Anspruch 14, wobei der Empfänger (18; 60) ausgebildet ist, die Empfangsleistung der Empfängerschaltung für einen Zeitraum, der länger als der Sendezeitraum (T_{Window}) ist, zu erhöhen.

16. Empfänger nach einem der Ansprüche 9 bis 15, wobei der Empfänger (18; 60) an einem Armband tragbar ist, insbesondere in eine Armbanduhr integriert ist.

17. Verfahren zum Versenden von Datenpaketen (16) für ein System zum Detektieren eines Ereignisses, entsprechend einer Überquerung eines Objekts (12) über eine überwachte Linie (14), mit den Schritten:
Erzeugen von aufeinanderfolgenden Datenpaketen (16) derart, dass jedes der Datenpakete (16) eine Information über eine Anzahl (E1) von Vorkommen des aufgetretenen Ereignisses bis zu einem Sendezeitpunkt (Tₙ) des Datenpakets (16) aufweist,
Versenden von den aufeinanderfolgenden Datenpaketen (16), unabhängig von einem Auftreten des Ereignisses, derart dass Sendezeitpunkte (Tₙ) von den aufeinanderfolgenden Datenpaketen (16) des Ereignisses jeweils innerhalb eines vorbestimmten Sendezeitraums (T_{WINDOW}) liegen.

18. Verfahren zum Empfangen von Datenpaketen (16) für ein System zum Detektieren eines Ereignisses, entsprechend einer Überquerung eines Objekts (12) über eine überwachte Linie (14), mit den Schritten:
Empfangen von aufeinanderfolgenden Datenpaketen (16) unabhängig von einem Auftreten des Ereignisses, wobei die Sendezeitpunkte (Tn) von den aufeinanderfolgenden Datenpaketen (16) des Ereignisses jeweils innerhalb eines vorbestimmten Sendezeitraums (T_{WINDOW}) liegen,
Auslesen der Datenpakete (16), wobei jedes der Datenpakete (16) eine Information über eine Anzahl (E1) von Vorkommen des aufgetretenen Ereignisses bis zu einem Sendezeitpunkt (Tₙ) des Datenpakets (16) aufweist.

19. Computerprogramm zur Durchführung des Verfahrens nach Anspruch 17 wenn das Computerprogramm auf einer programmierbaren Hardwarekomponente abläuft.

20. Computerprogramm zur Durchführung des Verfahrens nach Anspruch 18, wenn das Computerprogramm auf einer programmierbaren Hardwarekomponente abläuft.

## Claims

1. A transmitter (10; 54; 56) for a system for detecting an event corresponding to an object (12) crossing a monitored line (14), wherein the transmitter (10) is configured to successively transmit data packets (16) independently of the occurrence of the event, each of the data packets (16) comprising a piece of information on a number (E1) of occurrences of the event which occurred up to a transmission time (Tₙ) of the data packet (16), wherein the transmission times (Tₙ) of the successive data packets (16) of the event are each located within a predetermined transmission time window (T_{WINDOW}).

2. The transmitter according to claim 1, wherein the transmitter is configured to generate the data packets such that each of the data packets (16) comprises a piece of information on the transmission time (Tₙ) of the data packet (16).

3. The transmitter according to claim 1 or 2, wherein the transmitter (10; 54; 56) is configured to generate each of the data packets (16) such that the data packet (16) comprises a piece of information on a radio resource for a subsequent data packet (16).

4. The transmitter according to any of the preceding claims, wherein the transmitter (10; 54; 56) is configured to generate the data packet (16) such that the data packet (16) comprises a piece of information on an age (A1) of the occurred event (E1).

5. The transmitter according to any of the preceding claims, wherein the transmitter (10; 54; 56) is configured to transmit each of the data packets (16) at a random transmission time (Tₙ) such that the data packet (16) is transmitted completely within its predetermined transmission time window (T_{WINDOW}).

6. The transmitter according to claim 3, wherein the radio resource is a transmission time (Tₙ) and/or a frequency of the subsequent data packet (16).

7. The transmitter according to any of the preceding claims, wherein the transmitter (54) is configured to transmit the successive data packets (16) in a multiplexing method using a second transmitter (56), and the transmitter (54) comprises a receive module which is configured to receive successive data packets (16) of the second transmitter (56), wherein each of the data packets (16) of the second transmitter (56) comprises at least one piece of information on a number (E2) of second events which occurred up to the transmission time (Tₙ), and wherein the transmitter (54) is configured to generate the successive data packets (16) such that each data packet (16) comprises a piece of information on the number (E2) of second events which occurred up to the transmission time (Tₙ).

8. The transmitter according to any of the preceding claims, wherein the event is a goal which corresponds to a gaming device (12), in particular a ball or a puck, crossing a monitored goal line (14).

9. A receiver (18; 60) for a system for detecting an event corresponding to an object (12) crossing a monitored line (14), wherein the receiver (18; 60) is configured to receive successive data packets (16) independently of the occurrence of the event, each of the data packets (16) comprising a piece of information on a number (E1) of occurrences of the event which occurred up to a transmission time (Tₙ) of the data packet (16), wherein the transmission times (Tₙ) of the successive data packets (16) are each located within a predetermined transmission time window (T_{WINDOW}).

10. The receiver according to claim 9, wherein each of the data packets (16) comprises a piece of information on the transmission time (Tₙ) of the data packet (16).

11. The receiver according to claim 9 or 10, wherein the receiver (18; 60) is configured to output a signal which indicates the event that a currently received data packet (16) comprises a piece of information on a number (E1) of occurred events which is higher than a number (E1) of occurred events according to a preceding data packet (16).

12. The receiver according to any of claims 9 to 11, wherein the receiver (18; 60) is configured to reduce a receive power of a receiver circuit between two successive data packets (16) based on a piece of information on the transmission time (Tₙ₊₁) of the subsequent data packet within the current data packet (16).

13. The receiver according to claim 12, wherein the receiver (18; 60) is configured to increase the receive power until it receives a subsequent data packet (16) if it does not or not completely receive a data packet (16) within an interval at the transmission time (Tₙ₊₁) according to a piece of information in a preceding data packet (16).

14. The receiver according to any of claims 9 to 13, wherein the receiver (18; 60) is configured to decrease a receive power of a receiver circuit if the receiver (18; 60) does not receive any data packet (16) over a time period which is greater than the predetermined time period (T_{Window}, T₀).

15. The receiver according to claim 14, wherein the receiver (18; 60) is configured to increase the receive power of the receiver circuit for a time period which is greater than the transmission time period (T_{Window}).

16. The receiver according to any of claims 9 to 15, wherein the receiver (18; 60) may be worn on a wristband, in particular be integrated into a watch.

17. A method for transmitting data packets (16) for a system for detecting an event corresponding to an object (12) crossing a monitored line (14), comprising:
generating successive data packets (16) such that each of the data packets (16) comprises a piece of information on a number (E1) of occurrences of the event which occurred up to a transmission time (Tₙ) of the data packet (16),
transmitting the successive data packets (16) independently of an occurrence of the event such that transmission times (Tₙ) of the successive data packets of the event are each located within a predetermined transmission time window (T_{WINDOW}).

18. A method for receiving data packets (16) for a system for detecting an event corresponding to an object (12) crossing a monitored line (14), comprising:
receiving successive data packets (16) independently of the occurrence of the event, wherein the transmission times (Tₙ) of the successive data packets (16) of the event are each located within a predetermined transmission time window (T_{WINDOW}),
reading out the data packets (16), wherein each of the data packets (16) comprises a piece of information on a number (E1) of occurrences of the event which occurred up to a transmission time (Tₙ) of the data packet (16).

19. A computer program for executing the method according to claim 17, when the computer program is executed on a programmable hardware component.

20. A computer program for executing the method according to claim 18, when the computer program is executed on a programmable hardware component.

## Revendications

1. Émetteur (10 ; 54 ; 56) destiné à un système de détection d'un événement correspondant à un franchissement par un objet (12) d'une ligne surveillée (14), l'émetteur (10) étant conçu pour émettre successivement des paquets de données (16), indépendamment d'une survenue de l'événement, de telle sorte que chacun des paquets de données (16) comporte une information sur un nombre (E1) d'occurrences de l'événement survenu jusqu'à un instant d'émission (Tₙ) du paquet de données (16), les instants d'émission (Tₙ) des paquets de données (16) successifs de l'événement étant situés chacun dans une période d'émission (T_{WINDOW}) prédéterminée.

2. Émetteur selon la revendication 1, l'émetteur étant conçu pour générer les paquets de données de telle sorte que chacun des paquets de données (16) comporte une information sur l'instant d'émission (Tₙ) du paquet de données (16).

3. Émetteur selon la revendication 1 ou 2, l'émetteur (10 ; 54 ; 56) étant conçu pour générer chacun des paquets de données (16) de telle sorte que le paquet de données (16) comporte une information sur une ressource radio destinée à un paquet de données (16) suivant.

4. Émetteur selon l'une des revendications précédentes, l'émetteur (10 ; 54 ; 56) étant conçu pour générer le paquet de données (16) de telle sorte que le paquet de données (16) comporte une information sur un âge (A1) de l'événement (E1) survenu.

5. Émetteur selon l'une des revendications précédentes, l'émetteur (10 ; 54 ; 56) étant conçu pour émettre chacun des paquets de données (16) à un instant d'émission (Tₙ) aléatoire de telle sorte que le paquet de données (16) soit entièrement émis dans sa période d'émission (T_{WINDOW}) prédéterminée.

6. Émetteur selon la revendication 3, la ressource radio étant un instant d'émission (Tₙ) et/ou une fréquence du paquet de données (16) suivant.

7. Émetteur selon l'une des revendications précédentes, l'émetteur (54) étant conçu pour émettre les paquets de données (16) successifs avec un deuxième émetteur (56) dans un procédé multiplex et l'émetteur (54) comportant un module de réception qui est conçu pour recevoir des paquets de données (16) successifs du deuxième émetteur (56), chacun des paquets de données (16) du deuxième émetteur (56) comportant au moins une information sur un nombre (E2) de deuxièmes événements survenu jusqu'à l'instant d'émission (Tₙ) et l'émetteur (54) étant conçu pour générer les paquets de données (16) successifs de telle sorte que chaque paquet de données (16) comporte une information sur le nombre (E2) de deuxièmes événements survenus jusqu'à l'instant d'émission (Tₙ).

8. Émetteur selon l'une des revendications précédentes, l'événement étant un but, correspondant à un franchissement par un dispositif de jeu (12), en particulier une balle ou un palet, d'une ligne de but surveillée (14).

9. Récepteur (18 ; 60) destiné à un système de détection d'un événement correspondant à un franchissement par un objet (12) d'une ligne surveillée (14), le récepteur (18, 60) étant conçu pour recevoir des paquets de données (16) successifs, indépendamment de la survenue de l'événement, chacun des paquets de données (16) comportant une information sur un nombre (E1) d'occurrences de l'événement survenu jusqu'à un instant d'émission (Tₙ) du paquet de données (16), les instants d'émission (Tₙ) des paquets de données (16) successifs de l'événement étant situés chacun dans une période d'émission (T_{WINDOW}) prédéterminée.

10. Récepteur selon la revendication 9, chacun des paquets de données (16) comportant une information sur l'instant d'émission (Tₙ) du paquet de données (16).

11. Récepteur selon la revendication 9 ou 10, le récepteur (18 ; 60) étant conçu pour émettre un signal qui indique l'événement lorsqu'un paquet de données (16) actuellement reçu comporte une information sur un nombre (E1) d'événements survenus qui est augmenté par rapport à un nombre (E1) d'événements survenus selon un paquet de données (16) précédent.

12. Récepteur selon l'une des revendications 9 à 11, le récepteur (18 ; 60) étant conçu pour réduire une puissance de réception d'un circuit récepteur entre deux paquets de données (16) successifs sur la base d'une information sur l'instant d'émission (Tₙ₊₁) du paquet de données suivant dans le paquet de données (16) actuel.

13. Récepteur selon la revendication 12, le récepteur (18 ; 60) étant conçu pour augmenter, lorsqu'il ne reçoit pas, ou pas complètement, un paquet de données (16) dans un intervalle à l'instant d'émission (Tₙ₊₁) selon une information dans un paquet de données (16) précédent, la puissance de réception jusqu'à ce qu'il reçoive un prochain paquet de données (16).

14. Récepteur selon l'une des revendications 9 à 13, le récepteur (18 ; 60) étant conçu pour réduire une puissance de réception d'un circuit récepteur lorsque le récepteur (18, 60) ne reçoit aucun paquet de données (16) sur une période supérieure à la période d'émission (T_{WINDOW}, T₀) prédéterminée.

15. Récepteur selon la revendication 14, le récepteur (18 ; 60) étant conçu pour augmenter la puissance de réception du circuit récepteur pendant une période supérieure à la période d'émission (T_{WINDOW}).

16. Récepteur selon l'une des revendications 9 à 15, le récepteur (18 ; 60) étant portable au niveau d'un bracelet, en particulier étant intégré dans une montre-bracelet.

17. Procédé d'émission de paquets de données (16) destiné à un système de détection d'un événement correspondant à un franchissement par un objet (12) d'une ligne surveillée (14), le procédé comprenant les étapes suivantes :
générer des paquets de données (16) successifs de telle sorte que chacun des paquets de données (16) comporte une information sur un nombre (E1) d'occurrences de l'événement survenu jusqu'à un instant d'émission (Tₙ) du paquet de données (16),
émettre des paquets de données (16) successifs indépendamment d'une survenue de l'événement de telle sorte que des instants d'émission (Tₙ) des paquets de données (16) successifs de l'événement soient situés chacun dans une période d'émission (T_{WINDOW}) prédéterminée.

18. Procédé de réception de paquets de données (16) destiné à un système de détection d'un événement correspondant à un franchissement par un objet (12) d'une ligne surveillée (14), le procédé comprenant les étapes suivantes :
recevoir des paquets de données (16) successifs indépendamment d'une survenue de l'événement, les instants d'émission (Tₙ) des paquets de données (16) successifs de l'événement étant situés chacun dans une période d'émission (T_{WINDOW}) prédéterminée,
lire les paquets de données (16), chacun des paquets de données (16) comportant une information sur un nombre (E1) d'occurrences de l'événement survenu jusqu'à un instant d'émission (Tₙ) du paquet de données (16).

19. Programme informatique destiné à la mise en oeuvre du procédé selon la revendication 17, lorsque le programme informatique est exécuté sur un composant matériel programmable.

20. Programme informatique destiné à la mise en oeuvre du procédé selon la revendication 18, lorsque le programme informatique est exécuté sur un composant matériel programmable.
